# EUROPÄISCHE PATENTANMELDUNG

(11) **EP 4 810 935 A1**
(43) Veröffentlichungstag der Anmeldung: **23.09.2026**
(21) Anmeldenummer: 25176825.5
(22) Anmeldetag: 15.05.2025
(51) Int. Cl.: G01N 1/22, G01N 35/04

(54) **VORRICHTUNG UND VERFAHREN ZUR ÜBERWACHUNG VON MIKROBIOLOGISCHEN VERUNREINIGUNGEN IN EINER KONTROLLIERTEN UMGEBUNG**

(30) Priorität: 18.03.2025 DE 102025110506
(71) Anmelder: SKAN AG, 4123 Allschwil (CH)
(72) Erfinder: Clifford, Vincent, 8048 Zürich (CH); Zeller, Mike, 4246 Wahlen (CH); Müller, Mathieu, 68510 Sierentzz (FR)
(74) Vertreter: Mertzlufft-Paufler, Cornelius

(57) **Zusammenfassung**

Der Erfindung liegt die Aufgabe zugrunde, mikrobiologische Verunreinigungen innerhalb einer kontrollierten Umgebung (2) in einem von der kontrollierten Umgebung (2) abgegrenzten Bereich (4) ohne Unterbrechung eines innerhalb der kontrollierten Umgebung (2) ablaufenden Prozesses kontinuierlich zu überwachen.

## Beschreibung

Die Erfindung betrifft eine Vorrichtung zur Überwachung von mikrobiologischen Verunreinigungen in einer kontrollierten Umgebung, vorzugsweise in einem Isolator, mit wenigstens einem von der kontrollierten Umgebung abgegrenzten Bereich, wobei ein Fluidstrom aus der kontrollierten Umgebung führbar ist, wobei der Fluidstrom ein in dem abgegrenzten Bereich angeordnetes Deponiermittel passiert.

Die Erfindung betrifft weiter eine Vorrichtung zur Überwachung von mikrobiologischen Verunreinigungen in einer kontrollierten Umgebung, vorzugsweise Isolator, mit wenigstens einem von der kontrollierten Umgebung abgegrenzten Bereich, wobei ein Fluidstrom aus der kontrollierten Umgebung führbar ist.

Die Erfindung betrifft darüber hinaus eine Vorrichtung zur Überwachung von mikrobiologischen Verunreinigungen in einer kontrollierten Umgebung, vorzugsweise Isolator, mit wenigstens einem von der kontrollierten Umgebung abgegrenzten Bereich, wobei ein Fluidstrom aus der kontrollierten Umgebung führbar ist, wobei der Fluidstrom in einem abgegrenzten und/oder dekontaminierbaren Bereich ein Deponiermittel passiert.

Die Erfindung betrifft des Weiteren ein Verfahren zum Überwachen von mikrobiologischen Verunreinigungen in einer kontrollierten Umgebung, vorzugsweise Isolator, wobei ein Fluidstrom, insbesondere ein Luftstrom, aus der kontrollierten Umgebung abgeführt wird, wobei der aus der kontrollierten Umgebung abgeführte Fluidstrom in einem von der kontrollierten Umgebung abgegrenzten und/oder dekontaminierbaren Bereich ein Deponiermittel passiert.

Die Erfindung betrifft weiter ein Verfahren zum Überwachen von mikrobiologischen Verunreinigungen in einer kontrollierten Umgebung, vorzugsweise Isolator, wobei ein Fluidstrom, insbesondere ein Luftstrom, aus der kontrollierten Umgebung abgeführt wird, wobei der aus der kontrollierten Umgebung abgeführte Fluidstrom ein Deponiermittel passiert, das in einem abgegrenzten und/oder dekontaminierbaren Bereich angeordnet ist.

Die Erfindung betrifft ferner ein Verfahren zum Überwachen von mikrobiologischen Verunreinigungen in einer kontrollierten Umgebung, vorzugsweise Isolator, wobei ein Fluidstrom, insbesondere ein Luftstrom, aus der kontrollierten Umgebung abgeführt wird, wobei der aus der kontrollierten Umgebung abgeführte Fluidstrom ein (beispielsweise über ein Präsentationsmittel exponiertes) Deponiermittel passiert, das in einem abgegrenzten Bereich angeordnet ist.

Die Erfindung betrifft ferner ein Verfahren zum Überwachen von mikrobiologischen Verunreinigungen in einer kontrollierten Umgebung, vorzugsweise Isolator, wobei ein Fluidstrom, insbesondere ein Luftstrom, aus der kontrollierten Umgebung abgeführt wird, wobei der aus der kontrollierten Umgebung abgeführte Fluidstrom ein (beispielsweise über ein Präsentationsmittel exponiertes) Deponiermittel passiert, das in einem abgegrenzten und/oder dekontaminierbaren Bereich angeordnet ist.

Die Erfindung betrifft weiter eine Verwendung einer gekapselten Einheit zum Transport eines Deponiermittels und/oder eines Nährmediums zu einer Gebrauchsstellung, in der das Deponiermittel in einem Fluidstrom exponiert wird.

Die Erfindung betrifft schließlich die Verwendung einer Tür eines Ports zur Handhabung, insbesondere zum Transport, eines Objekts, das in einer an den Port ankoppelbaren gekapselten Einheit angeordnet ist.

Die Erfindung betrifft schließlich ein Verfahren zum Überwachen von mikrobiologischen Verunreinigungen in einer kontrollierten Umgebung, vorzugsweise Isolator, wobei ein Fluidstrom, insbesondere ein Luftstrom, aus der kontrollierten Umgebung abgeführt wird, wobei der aus der kontrollierten Umgebung abgeführte Fluidstrom ein Deponiermittel passiert, das in einem abgegrenzten und/oder dekontaminierbaren Bereich angeordnet ist.

Der Erfindung liegt die Aufgabe zugrunde, eine Überwachung einer kontrollierten Umgebung auf mikrobiologische Verunreinigungen zu vereinfachen.

Vorrichtungen und Verfahren zur Überwachung von mikrobiologischen Verunreinigungen in einer kontrollierten Umgebung sind aus der Praxis bekannt, beispielsweise wird hierzu ein Nährmedium direkt in die kontrollierte Umgebung, beispielsweise ein Isolator, eingebracht.

Zur Lösung der genannten Aufgabe sind erfindungsgemäß die Merkmale des Anspruchs 1 vorgesehen. Insbesondere wird somit zur Lösung der genannten Aufgabe bei einer Vorrichtung der eingangs beschriebenen Art erfindungsgemäß vorgeschlagen, dass im abgegrenzten Bereich Kontaktierungsmittel zur Kontaktierung des Deponiermittels mit einem Nährmedium ausgebildet sind.

Somit ermöglicht es die Erfindung, mikrobiologische Verunreinigungen frühzeitig und kontinuierlich innerhalb einer kontrollierten Umgebung zu detektieren und zu überwachen, ohne durch die Überwachung selbst ein Kontaminationsrisiko der kontrollierten Umgehung einzugehen. Dies vereinfacht die Überwachung deutlich.

Eine kontrollierte Umgebung kann beispielsweise als ein begrenzter Raumbereich charakterisierbar sein, in welchem definierte Umgebungsbedingungen, insbesondere in Bezug auf eine Luftreinheit und/oder eine Oberflächenreinheit, schaffbar und/oder aufrechterhaltbar sind, beispielsweise durch eine Kontrolle eines Luftaustauschs mit einer Außenwelt der kontrollierten Umgebung. Die Kontrolle des Luftaustausches kann beispielsweise durch einen völligen Ausschluss des Luftaustausches im Normalbetrieb (beispielsweise bis auf eine geschlossene Luftzirkulation) und/oder eine konsequente Vorgabe einer Richtung des Luftaustausches (in die kontrollierte Umgebung oder aus der kontrollierten Umgebung) realisiert sein. Beispiele kontrollierter Umgebungen können Isolatoren, Restricted Access Barrier Systems (zugangsbeschränkte Barrierensysteme, insbesondere vom offenen oder geschlossenen Typ), Containments, Gloveboxes und/oder Reinräume im Allgemeinen umfassen. Innerhalb der kontrollierten Umgebung, insbesondere des Containments oder des Isolators, können somit verschiedene Prozesse zur Verarbeitung verschiedenster Erzeugnisse, beispielsweise pharmazeutischer Erzeugnisse, erfolgen, wobei die Gefahr einer Kontamination wenigstens eines Erzeugnisses durch Partikel und/oder mikrobiologischer Verunreinigungen von außerhalb und/oder nach außerhalb der kontrollierten Umgebung dezimiert werden kann. Solche pharmazeutischen Erzeugnisse können beispielsweise jeweils einen pharmazeutischen Behälter zu einer Aufnahme eines pharmazeutischen Präparats aufweisen. Eine Liste von Beispielen solcher pharmazeutischen Behälter umfasst zumindest Vials, Spritzen, Karpulen (Zylinderampullen) und sonstige befüllbare pharmazeutische Behälter und alles, was eine aseptische Handhabung verlangt.

Ein weiteres Merkmal einer kontrollierten Umgebung kann sein, dass die Luft gereinigt eingebracht werden kann. Dies kann über Filter, insbesondere Schwebstofffilter (HEPA-Filter - High Efficiency Particulate Airfilter) gewährleistet werden, welche beispielsweise in Isolatoren möglichst großflächig das obere Ende einer kontrollierten Umgebung bilden.

Als abgegrenzter Bereich kann beispielsweise ein Bereich verstanden werden, der gegenüber der kontrollierten Umgebung und/oder der Außenwelt abgrenzbar, insbesondere abschließbar und/oder räumlich trennbar, ist. Der abgegrenzte Bereich kann dabei beispielsweise ebenfalls die bereits beschriebenen Anforderungen einer kontrollierten Umgebung erfüllen und somit beispielsweise eine weitere kontrollierte oder zumindest kontrollierbare Umgebung bilden.

Der Fluidstrom kann dabei beispielsweise ein Luftstrom sein, der vorzugsweise aktiv aus der kontrollierten Umgebung, beispielsweise mittels Pumpe, abgeführt und zum abgegrenzten Bereich geleitet wird.

Ein weiteres Merkmal einer kontrollierten Umgebung kann sein, dass die Luft kontrolliert führbar ist. Dies erschwert ungewollte Ablagerungen von Verunreinigungen.

Das Deponiermittel kann beispielsweise ein durchströmbares Filterelement, beispielsweise aus Gelatine, oder ein Plättchen, beispielsweise aus Gelatine, sein.

Das Deponiermittel kann beispielsweise aus einem Material bestehen, das sich auf einem Nährmedium auflöst. Somit ist ein rückstandsfreier oder nahezu rückstandsfreier Übertrag von deponierten Verunreinigungen, insbesondere aus einem Inneren des Deponiermittels, auf das Nährmedium bei einer Kontaktierung ermöglicht. Beispielsweise löst und/oder zersetzt sich die Gelatine nahezu vollständig, insbesondere teilweise, bei Kontakt mit einer insbesondere feuchten Agar-Agar-Platte auf, sodass Kolonien mikrobiologischer Verunreinigungen sichtbar werden.

Beispielsweise kann das teilweise Auflösen der Gelatine auf der Agar-Agar-Platte, abhängig von Temperatur und Feuchtigkeit, auch während eines Bebrütens erfolgen. Besonders vorteilhaft wird die Gelatine weich und transparent, wodurch ein Wachstum und eine Auswertung von Kolonien mikrobiologischer Verunreinigungen erleichtert. Eine Auswertung kann dabei beispielsweise mittels Identifikation und/oder CFU (Colony forming units)-Zählung erfolgen.

Ein entsprechender Gelatine-Filter ist ferner vorteilhafterweise biologisch abbaubar und löslich bei Temperaturen ab circa 30°C. Für die Bebrütung (Übertragung der Verunreinigungen auf das Nährmedium) wird der Filter direkt auf das Agar gelegt, meistens auf TSA (Tryptic Soy Agar). Der Filter wird dabei, wie bereits erwähnt, nicht vollständig absorbiert oder aufgelöst, jedoch stark verflüssigt, so dass Mikroorganismen beziehungsweise die mikrobiologischen Verunreinigungen auf dem Agar weiterwachsen können.

Überaus vorteilhaft bleibt die Struktur von Gelatine-Filtern somit zunächst erhalten, wird aber mit der Zeit weich und wird teilweise aufgelöst, geht jedoch nicht vollständig ins Agar-Agar über. Es können demnach Keime aus der Luft gesammelt und anschließend als Überträgermedium für eine Kultivierung dienen.

Das Deponiermittel kann beispielsweise zuckerfrei und/oder proteinbasiert sein. Somit kann das Deponiermittel zwar nicht unmittelbar zu einer Inkubation geeignet sein. Von Vorteil ist jedoch, dass das Deponiermittel nicht oder nur sehr langsam austrocknet, was bei Nährmedien einen länger andauernden Einsatz erschwert.

Allgemein kann als Deponiermittel im Sinne der Erfindung ein im Strömungsweg des Fluidstroms angeordnetes, vorzugsweise dünnwandiges, Element verstanden werden, das es erlaubt, mikrobiologische Verunreinigungen einzufangen und/oder aufzunehmen. Ein als Gelatine-Plättchen ausgebildetes Deponiermittel hat hierbei den hervorragenden Vorteil, dass mikrobiologische Verunreinigungen daran haften können, sobald diese in Kontakt mit der Gelatine kommen. Ein hervorragender Vorteil von Gelatine-Plättchen ist, dass sich diese, wie bereits beschriebennahezu vollständig im Nährmedium auflösen und bestenfalls alle oder nahezu alle am Gelatine-Plättchen haftenden mikrobiologischen Verunreinigungen sodann auf das Nährmedium übertragen werden können.

Das Nährmedium kann beispielsweise geleeartig, fest, insbesondere als Agar, oder flüssig, insbesondere als Bouillon, sein und dient dazu, mikrobiologisches Wachstum zu detektieren und/oder nachzuweisen.

Agar-Agar ist ein Geliermittel, das aus Rotalgen gewonnen wird. Es bildet eine feste, geleeartie Substanz, die als Trägermedium für Nährstoffe dient. Mikroorganismen, insbesondere mikrobiologische Verunreinigungen, wachsen nicht direkt auf Agar, sondern auf den Nährstoffen, die im Agar gelöst sind (beispielsweise Tryptic Soy Borth), Blut, et cetera).

Agar schmilzt bei circa 85°C und erstarrt bei circa 40 bis 45°C, wodurch sich ein herausragender Vorteil ergibt: Es kann erhitzt und abgekühlt werden, ohne dass es sich bei Inkubationstemperaturen (>30°C) wieder verflüssigt. Ferner bildet Agar den Vorteil einer stabilen Oberfläche, auf der Kolonien separat wachsen können, was wiederum wichtig für die Keimzählung und Identifizierung ist. Dabei dient Agar selbst nicht als Nährstoffquelle für Mikroorganismen, weshalb, ohne Zugabe von Nährstoffen wie beispielsweise Pepton, Glucose, Blut et cetera, kein Wachstum von Mikroorganismen stattfindet.

Das Nährmedium und das Deponiermittel können beispielsweise Bestandteil einer gekapselten Einheit sein, die über einen Port mit der abgegrenzten Umgebung verbunden werden können, wobei Deponiermittel und Nährmedium zunächst durch wenigstens eine Schnittstelle innerhalb der gekapselten Einheit, beispielsweise einem abnehmbaren und das Nährmedium abdeckenden Verschluss, beispielsweise einem Nährmediumsverschluss, voneinander räumlich getrennt sind. Die gekapselte Einheit kann dabei beispielsweise aus zwei voneinander trennbaren Einheiten gebildet sein, die wiederum miteinander gekoppelt werden können. Eine erste Einheit kann beispielsweise von einem Grundkörper mit Platzhalter für die das Nährmedium beinhaltende zweite Einheit, einem Deckel, gebildet sein, wobei an einem Boden des Grundkörpers das von dem Fluidstrom durchströmbare Deponiermittel platziert werden kann, der wiederum von einer zumindest teilweise durchströmbaren Unterlage beziehungsweise Anlagestelle des Grundkörpers abgestützt wird. Die das Nährmedium beinhaltende Einheit kann der oder ein Deckel sein, in den ein federndes Element, ein Nährmediumshalter und das Nährmedium selbst eingelegt werden kann. Der Deckel kann kraft- und/oder formschlüssig, beispielsweise mittels Bajonett-Verschluss, mit dem Nährmediumsverschluss gekoppelt werden, wodurch wiederum das Nährmedium verschlossen und das federnde Element durch den Verschluss vorgespannt werden kann. Ferner kann der Grundkörper mit dem Deckel kraft- und/oder formschlüssig verbunden werden, beispielsweise über einen Bajonett-Verschluss, wobei Grundkörper und Deckel gemeinsam die gekapselte Einheit bilden. Ist der Grundkörper, an dessen Boden beziehungsweise Anlagestelle das Deponiermittel eingelegt und von dieser abgestützt werden kann, mit dem Deckel der zweiten Einheit gekoppelt und bilden somit die gekapselte Einheit, sind Deponiermittel und Nährmedium von dem das Nährmedium abdeckenden Verschluss des Deckels, wie bereits erwähnt, räumlich voneinander getrennt. Um das Deponiermittel im Fluidstrom exponieren zu können, wird der Deckel zunächst in einem gesonderten Bereich des abgegrenzten Bereichs platziert. Dies kann über eine Handhabungsvorrichtung erfolgen, die weiter unten näher spezifiziert wird.

Sobald der Fluidstrom das Deponiermittel passiert hat, kann der das Nährmedium verdeckende Verschluss des Deckels der gekapselten Einheit entfernt werden, wodurch der Nährmediumsträger mitsamt Nährmedium aufgrund der Federrückstellkraft des vorgespannten federnden Elements derart bewegt werden kann, dass, sobald der Grundkörper, an dessen Anlagestelle das von dem Fluidstrom passierte Deponiermittel platziert ist, in einer gemeinsamen Bewegungsebene mit dem Deckel liegt, eine Kontaktierung zwischen Nährmedium und Deponiermittel ermöglicht werden kann. Das federnd gelagerte Nährmedium und die Unterlage des Deponiermittels bilden hierbei die Kontaktierungsmittel.

Besonders vorteilhaft kann durch eine Kontaktierung zwischen dem Deponiermittel und dem Nährmedium im abgegrenzten Bereich, und somit außerhalb der kontrollierten Umgebung, eine Kontamination der kontrollierten Umgebung während der Kontaktierung beziehungsweise Überwachung verhindert werden. Das Nährmedium wird somit nicht selbst von dem Fluidstrom passiert, sondern es erfolgt lediglich eine passive Kontaktierung des Fluidstroms mit dem Nährmedium über das Deponiermittel im abgegrenzten Bereich. Somit muss ein innerhalb der kontrollierten Umgebung ablaufender Prozess nicht unterbrochen werden. Aufgrund der Kontaktierungsmittel kann die Kontaktierung ferner überaus vorteilhaft ohne ein Eingreifen von außen erfolgen.

Bei einer weiteren vorteilhaften Ausgestaltung kann vorgesehen sein, dass die Kontaktierungsmittel von außerhalb des abgegrenzten Bereichs betätigbar sind.

Besonders vorteilhaft muss zur Betätigung der Kontaktierungsmittel somit nicht in den abgegrenzten Bereich eingegriffen werden. Dabei kann beispielsweise vorgesehen sein, dass die Kontaktierungsmittel manuell betätigt und/oder automatisiert gesteuert werden.

Insbesondere sind die Kontaktierungsmittel von außerhalb des abgegrenzten Bereichs antreibbar.

Dabei kann beispielsweise vorgesehen sein, dass die Kontaktierungsmittel, beispielsweise über einen Motor, motorisch angetrieben werden können. Der Motor zum Antreiben der Kontaktierungsmittel ist dabei vorteilhafterweise außerhalb des abgegrenzten Bereich angeordnet, um eine Kontamination des abgegrenzten Bereichs aufgrund des Motors verhindern zu können.

Alternativ oder zusätzlich sind zur Lösung der genannten Aufgabe erfindungsgemäß die Merkmale des nebengeordneten, auf eine Vorrichtung gerichteten Anspruchs vorgesehen. Insbesondere wird somit zur Lösung der genannten Aufgabe bei einer Vorrichtung der eingangs beschriebenen Art erfindungsgemäß vorgeschlagen, dass Führungsmittel zu einer definierten und/oder geführten Kontaktierung des Deponiermittels mit dem oder einem Nährmedium ausgebildet sind.

Bei den im Anspruch definierten Merkmalen kann es sich um bereits beschriebene und/oder beanspruchte Merkmale handeln.

Die Führungsmittel können dabei beispielsweise die Kontaktierungsmittel führen.

Besonders vorteilhaft kann somit ein kontrollierbarer und/oder geführter Kontakt zwischen Deponiermittel und Nährmedium erreicht werden. Beispielsweise kann hierdurch eine Relativbewegung zwischen dem Deponiermittel und dem Nährmedium realisiert werden , sodass die Kontaktierung mit dem, beispielsweise federnd gelagerten, Nährmedium überhaupt ermöglicht werden kann. Wird beispielsweise das oder ein Gelatine-Plättchen als Deponiermittel verwendet, kann durch die geführte und/oder definierte Kontaktierung sichergestellt werden, dass dieses von dem Nährmedium, beispielsweise einem Agar, vollständig aufgenommen wird.

Beispielsweise kann die Vorrichtung einen bewegbaren Gehäuseabschnitt aufweisen, der insbesondere translatorisch, beispielsweise hoch und runter, bewegt werden kann. Dabei kann beispielsweise vorgesehen sein, dass der bewegbare Gehäuseabschnitt zumindest abschnittsweise die bereits beschriebene gekapselte Einheit, insbesondere den Grundkörper der gekapselten Einheit, umgreift, wodurch wiederum vorteilhafterweise die zuvor beanspruchte definierte und/oder geführte Kontaktierung des Deponiermittels mit dem Nährmedium ermöglicht werden kann. Ferner kann vorgesehen sein, dass der Grundkörper mit dem bewegbaren Gehäuseabschnitt über den Port kraft- und/oder formschlüssig, beispielsweise mittels Bajonett-Verschluss, gekoppelt werden kann.

Ferner kann beispielsweise vorgesehen sein, dass der Deckel der gekapselten Einheit ein Koppelelement aufweist, das mit einem Gegenkoppelelement an einer bewegbaren Handhabungsvorrichtung kraft- und/oder formschlüssig zusammenwirkt. Dabei kann vorgesehen sein, dass das Gegenkoppelelement ebenfalls derart geführt bewegt werden kann, dass der Deckel mitsamt Nährmedium und Verschluss vorteilhafterweise von dem Grundkörper gelöst und in den oder einen gesonderten Bereich innerhalb des abgegrenzten Bereichs positioniert wird, wobei nach dem Entfernen des Deckels das Deponiermittel im Grundkörper freigelegt wird. Ferner wird hierdurch ein dem Port vorgelagerter Zuführabschnitt zum Zuführen des Fluidstroms freigelegt oder geöffnet, der zuvor von der Handhabungsvorrichtung verschlossen wurde. Der Zuführabschnitt kann eine Absaugstelle für den Fluidstrom aus der kontrollierten Umgebung definierten. Ferner kann der Zuführabschnitt mit einer Fluideinlassleitung gekoppelt sein, die den Fluidstrom aus der kontrollierten Umgebung führt und somit die Absaugstelle für den Fluidstrom definiert. Dabei kann vorgesehen sein, dass zwischen der Absaugstelle für den Fluidstrom und dem Deponiermittel eine Leitungslänge von weniger oder gleich einem Meter bestimmt ist.

Beispielsweise kann ferner vorgesehen sein, dass die oder das Führungsmittel rotatorische Bewegungen durchführen.

Die Handhabungsvorrichtung kann beispielsweise derart bewegt werden, dass der Grundkörper, der vorzugsweise mittels Bajonett-Verschluss mit dem Deckel der gekapselten Einheit gekoppelt ist, gelöst werden kann. Der Grundkörper kann ferner, wie bereits beschrieben, kraft- und/oder formschlüssig, beispielsweise ebenfalls mittels Bajonett-Verschluss, über den Port mit dem bewegbaren Gehäuseabschnitt gekoppelt werden. Sobald der Deckel von dem Gegenkoppelelement der Handhabungsvorrichtung aufgenommen und in den gesonderten Bereich bewegt wurde, kann der bewegbare Gehäuseabschnitt, wie weiter unten näher beschrieben, derart bewegt werden, dass das im Grundkörper eingelegte Deponiermittel dicht an dem Zuführabschnitt anliegt und das Deponiermittel vollständig einen Fluidstromweg des Fluidstroms ausfüllt, beispielsweise in dem ein Fluidstromweg senkrecht zu einer Längsausrichtung des Deponiermittels gewählt wird. Nachdem der Fluidstrom das Deponiermittel passiert hat, kann der Grundkörper wieder von dem Zuführabschnitt wegbewegt und der Deckel ohne den das Nährmedium abdeckenden Verschluss von der bewegbaren Handhabungsvorrichtung in die Ursprungsposition und somit in eine gemeinsame Ebene und/oder Achse mit dem Deponiermittel bewegt werden. Anschließend kann der über Führungsmittel bewegbare Gehäuseabschnitt in Richtung des Deckels mit freigelegtem Nährmedium bewegt, insbesondere angetrieben, werden, wodurch die Kontaktierung zwischen Nährmedium und Deponiermittel über die bereits beschriebenen Kontaktierungsmittel und der Führungsmittel erfolgen kann.

Unter einer definierten Kontaktierung kann verstanden werden, dass über die Führungsmittel eine ausreichende und definierbare Presskraft zwischen Deponiermittel und Nährmedium ermöglicht werden kann. Unter einer geführten Kontaktierung kann verstanden werden, dass verhindert werden kann, dass das Deponiermittel und/oder das Nährmedium während der Kontaktierung zueinander unterschiedlich ausgerichtet sind.

Dabei kann beispielsweise vorgesehen sein, dass Bewegungsabläufe der Führungsmittel antreibbar, regelbar und/oder steuerbar sind.

Bei einer weiteren vorteilhaften Ausgestaltung der Erfindung kann vorgesehen sein, dass die Führungsmittel eine Linearführung bilden. Eine Linearführung kann eine Kontaktierung führen, bei der zwei flächige Objekte zusammengebracht werden, ohne Biegestress einzubringen, bei dem die Materialien brechen könnten.

Dabei kann beispielsweise vorgesehen sein, dass hierdurch von den mit den Führungsmitteln verbundenen Elementen, beispielsweise Kontaktierungsmittel, zur Kontaktierung zwischen Deponiermittel und Nährmedium aufwärts, abwärts und/oder seitwärtige Bewegungen durchgeführt werden können. Ferner kann auch vorgesehen sein, dass über die Führungsmittel Drehbewegungen durchgeführt werden können. Besonders vorteilhaft können hierdurch verschiedenste Bewegungen durchgeführt werden. Die Führungsmittel können neben einer Linearführung somit auch von weiteren Führungen gebildet sein, die Bewegungen in allen Freiheitsgraden ermöglichen.

Allgemein können die Führungsmittel und/oder die Kontaktierungsmittel von Robotern gebildet sein.

Bei einer weiteren vorteilhaften Ausgestaltung kann vorgesehen sein, dass das Nährmedium federnd abgestützt ist.

Dabei kann beispielsweise vorgesehen sein, dass das Nährmedium von dem bereits beschriebenen federnden Element innerhalb des Deckels abgestützt ist. Besonders vorteilhaft kann das Nährmedium somit, beispielsweise dann, wenn der oder ein das Nährmedium abdeckender Verschluss des Deckels, insbesondere in bereits beschriebener Art und Weise, entfernt wird, aufgrund der Federrückstellkraft derart bewegt werden, dass sich das Nährmedium über ein axiales Ende des bereits beschriebenen Deckels erstreckt und eine Kontaktierung mit dem Deponiermittel durch die, vorzugsweise motorisch angetriebenen, Kontaktierungsmittel und der Führungsmittel erleichtert und/oder verbessert werden kann.

Bei einer weiteren vorteilhaften Ausgestaltung der Erfindung kann vorgesehen sein, dass dem Deponiermittel ein Partikelzähler vorgeschaltet ist.

Der Partikelzähler kann dabei beispielsweise zur Erfassung einer Partikelanzahl von Verunreinigungen dienen.

Dabei kann beispielsweise vorgesehen sein, dass der Partikelzähler in der kontrollierten Umgebung und/oder im abgegrenzten Bereich an einer Fluidleitung und/oder der oder einem Zuführabschnitt angeordnet ist.

Besonders vorteilhaft ist dabei, dass die Überwachung auf mikrobiologische Verunreinigungen somit durch funktionell unterschiedliche Methoden um quantitative Angabe, beispielsweise Anzahl und/oder Größe der mikrobiologischen Verunreinigungen, ergänzt werden kann. Der Partikelzähler kann ferner zur genaueren Eingrenzung eines Zeitpunkts der mikrobiologischen Verunreinigung herangezogen werden, wodurch wiederum Chargen, die innerhalb der kontrollierten Umgebung prozessiert wurden, frühzeitig aussortiert werden können.

Vorteilhaft ist somit, dass eine solche Kombination eine schnellere Reaktionszeit zur Unterbrechung des innerhalb der kontrollierten Umgebung durchgeführten Prozesses ermöglicht.

Vorteilhaft ist zudem, dass über den Partikelzähler die Anzahl möglicher Verunreinigungen bestimmt werden kann, während über das Nährmedium detektiert werden kann, welche Art der Verunreinigung vorliegt.

Alternativ oder zusätzlich sind zur Lösung der genannten Aufgabe erfindungsgemäß die Merkmale des nebengeordneten, auf eine Vorrichtung gerichteten Anspruchs vorgesehen. Insbesondere wird somit zur Lösung der genannten Aufgabe bei einer Vorrichtung der eingangs beschriebenen Art erfindungsgemäß vorgeschlagen, dass der dekontaminierbare und/oder abgegrenzte Bereich einen Port hat, an den ein Grundkörper einer gekapselten Einheit andockbar ist und dass die gekapselte Einheit einen über den Port abnehmbaren Deckel hat und ein Nährmedium aufnimmt und der Grundkörper in Gebrauchsstellung einen Abschnitt des Fluidstroms führt und dass der Abschnitt des Fluidstroms durch den Port zum Deponiermittel geführt ist.

Bei den im Anspruch definierten Merkmalen kann es sich um bereits beschriebene und/oder beanspruchte Merkmale handeln.

Bei der gekapselten Einheit kann es sich um die bereits beschrieben und/oder beanspruchte gekapselte Einheit handeln. Besonders vorteilhaft an der gekapselten Einheit ist, dass diese auch während toxischen Prozessen (und somit auch toxischen Fluidströmen, die abgeführt werden) verwendet werden können, ohne dass eine toxische Kontamination der Außenwelt beim Abkoppeln der gekapselten Einheit riskiert wird.

Als Gebrauchsstellung des Grundkörpers der gekapselten Einheit kann die Stellung verstanden werden, in welchem der Fluidstrom über den Port zum Deponiermittel geführt wird.

Der dekontaminierbare Bereich kann mit der bereits beschriebenen und/oder beanspruchten abgegrenzten Umgebung übereinstimmen. Ferner kann der dekontaminierbare Bereich Teil der kontrollierten Umgebung sein oder die kontrollierte Umgebung ausbilden. Der dekontaminierbare Bereich ist ferner der Bereich der Vorrichtung, der vor dem Überwachen auf mikrobiologische Verunreinigungen, vorzugsweise mittels Wasserstoffperoxid, dekontaminiert wird.

Besonders vorteilhaft kann somit vor dem Überwachen auf mikrobiologische Verunreinigungen sichergestellt werden, dass die kontrollierte Umgebung und/oder der dekontaminierbare Bereich keine mikrobiologischen Verunreinigungen aufweisen, bevor die Überwachung erfolgt.

Ferner ist vorteilhaft, dass über den Port selbst, beispielsweise mittels der bereits beschriebenen Handhabungsvorrichtung, der Deckel abgenommen werden kann, so dass kein zusätzliches Eingreifen von außerhalb des dekontaminierbaren und/oder abgegrenzten Bereichs notwendig ist. Die Überwachung auf mikrobiologische Verunreinigungen kann somit kontinuierlich während eines Prozesses, der innerhalb der kontrollierten Umgebung erfolgt, durchgeführt werden, ohne diesen stoppen zu müssen und ohne ein Risiko einzugehen, dass aufgrund der Überwachung mikrobiologische Verunreinigungen in die kontrollierte Umgebung selbst gelangen.

Bei einer weiteren vorteilhaften Ausgestaltung der Erfindung kann vorgesehen sein, dass der Deckel und/oder der Grundkörper ein Koppelelement aufweist, das mit einem Gegenkoppelelement des Ports koppelbar ist.

Beispielsweise kann vorgesehen sein, dass der Deckel und/oder der Grundkörper der gekapselten Einheit mittels Bajonett-Verschluss an dem Port angedockt beziehungsweise mit dem Port gekoppelt wird, wodurch besonders vorteilhaft ein schnelles Koppeln und/oder Entkoppeln der gekapselten Einheit an dem Port ermöglicht werden kann.

Eine weitere vorteilhafte Ausgestaltung der Erfindung kann vorsehen, dass die gekapselte Einheit eine fluiddurchlässige Anlagestelle und/oder Präsentationsmittel für das Deponiermittel ausbildet.

Bei der fluiddurchlässigen Anlagestelle und/oder der Präsentationsmittel kann es sich beispielsweise um die bereits beschriebene Unterlage der Kontaktierungsmittel handeln. Besonders vorteilhaft kann das Deponiermittel somit präzise von dem Grundkörper der gekapselten Einheit aufgenommen werden. Durch die Fluiddurchlässigkeit kann der Fluidstrom, nachdem dieser das Deponiermittel passiert hat, die Anlagestelle passieren und vorteilhafterweise aus der gekapselten Einheit abgeführt werden. Unterhalb des Deponiermittels und der fluiddurchlässigen Anlagestelle kann wiederum ein von dem Grundkörper der gekapselten Einheit gebildeter und von dem Fluidstrom durchströmbarer Unterboden ausgebildet sein, über den der Fluidstrom zu einem Fluidauslass geführt werden kann. Dies bildet den Abschnitt des Fluidstroms.

Bei einer weiteren vorteilhaften Ausgestaltung der Erfindung kann vorgesehen sein, dass der Grundkörper das Deponiermittel unverlierbar aufnimmt. Dies kann beispielsweise form-, kraft- und/oder stoffschlüssig erreicht sein.

Eine unverlierbare Befestigung oder Aufnahme kann beispielsweise dadurch charakterisierbar sein, dass ein unkontrolliertes selbsttätiges Lösen zumindest bis zu einer vordefinierten Beanspruchung vermieden ist. Dies schließt die Möglichkeit eines beabsichtigten Ablösens nicht aus.

Dabei kann beispielsweise vorgesehen sein, dass die fluiddurchlässige Anlagestelle und/oder das oder die Präsentationsmittel umfangsseitig ausgebildete Haken hat, die das Deponiermittel zumindest abschnittsweise umgreifen. Besonders vorteilhaft kann somit eine Arretierung, Positionierung und/oder Fixierung des Deponiermittels erreicht werden.

Bei einer weiteren vorteilhaften Ausgestaltung kann die Erfindung vorsehen, dass der Deckel das Nährmedium unverlierbar aufnimmt.

Dies kann beispielsweise durch den oder einen Nährmediumsträger erreicht werden, wodurch vorteilhafterweise erreicht werden kann, dass das Nährmedium im Deckel arretiert, positioniert und/oder fixiert werden kann.

Bei einer weiteren vorteilhaften Ausgestaltung der Erfindung kann vorgesehen sein, dass die gekapselte Einheit im Abschnitt des Fluidstroms ein Rücklaufsperrventil hat. Besonders vorteilhaft kann somit der über den Port dem Deponiermittel zugeführte Fluidstrom, nachdem dieser das Deponiermittel und die fluiddurchlässige Anlagestelle passiert hat, zu dem Fluidauslass mit dem Rücklaufsperrventil geleitet werden, wodurch ein Zurückströmen des Fluids, insbesondere ein Rückströmen, des Fluidstroms von dem Grundkörper zurück in die kontrollierte Umgebung, verhindert werden kann.

Der Fluidauslass kann dabei mit einer Fluidauslassleitung, insbesondere einer Saugleitung, verbunden werden, der den Fluidstrom weiterleitet, beispielsweise zur Außenwelt.

Bei einer weiteren vorteilhaften Ausgestaltung der Erfindung kann vorgesehen sein, dass der dekontaminierbare Bereich die kontrollierte Umgebung, ein Teil der kontrollierten Umgebung oder ein oder der von der kontrollierten Umgebung abgegrenzter Bereich ist.

Insbesondere vor dem Überwachen auf mikrobiologische Verunreinigungen wird die kontrollierte Umgebung dekontaminiert. Der mit dem Dekontaminationsmittel versetzte Fluidstrom wird in analoger Weise aus der kontrollierten Umgebung abgeführt und zum von der kontrollierten Umgebung abgegrenzten Bereich geführt, der sodann den dekontaminierbaren Bereich ausbildet. Ferner kann beispielsweise vorgesehen sein, dass die kontrollierte Umgebung ein separates Dekontaminationssystem enthält. Ferner kann vorgesehen sein, dass der dekontaminierbare Bereich selbst ein Teil der kontrollierten Umgebung ist oder diese ausbildet, wodurch vorteilhafterweise verschiedene Möglichkeiten zur Überwachung auf mikrobiologische Verunreinigungen ermöglicht werden können.

Besonders vorteilhaft kann der abgegrenzte Bereich somit ebenfalls dekontaminiert werden, um sicherzustellen, dass mikrobiologische Verunreinigungen nicht bereits vor der Überwachung im abgegrenzten und/oder dekontaminierbaren Bereich oder der kontrollierten Umgebung vorhanden sind.

Es kann vorgesehen sein, dass der Deckel das Nährmedium und der Grundkörper das Deponiermittel aufnimmt. Besonders vorteilhaft können somit sämtliche zum Nachweis der mikrobiologischen Verunreinigungen notwendigen Mittel in der gemeinsam gekapselten Einheit aufbewahrt und dennoch unabhängig voneinander bewegt werden.

Es ergeben sich ferner bereits beschriebene Vorteile des Deponiermittel und/oder des Nährmediums.

Bei einer weiteren vorteilhaften Ausgestaltung der Erfindung kann vorgesehen sein, dass der abgegrenzte Bereich oder der dekontaminierbare Bereich einen bewegbaren Gehäuseabschnitt aufweisen.

Bei dem bewegbaren Gehäuseabschnitt kann es sich um den bereits beschriebenen und/oder beanspruchten bewegbaren Gehäuseabschnitt handeln, über den der Grundkörper vorteilhafterweise bewegt werden kann. Ferner kann der den Grundkörper aufnehmende Port Bestandteil des bewegbaren Gehäuseabschnitt sein. Beispielsweise ist der Port durch eine auf den Grundkörper angepasste Aussparung des bewegbaren Gehäuseabschnitts gebildet.

Insbesondere ist durch den bewegbaren Gehäuseabschnitt der Abschnitt des Fluidstroms an den vorgelagerten Zuführabschnitt anschließbar und/oder das oder ein Nährmedium mit dem oder einem Deponiermittel in Kontakt bringbar.

Überaus vorteilhaft kann somit ein vollständig autonomes Überwachen auf mikrobiologische Verunreinigungen ermöglicht werden. Das Anschließen des Abschnitts des Fluidstrom an den vorgelagerten Zuführabschnitt kann bedeuten, dass der Grundkörper mitsamt Deponiermittel an den, insbesondere dem Port, vorgelagerten Zuführabschnitt in bereits beschriebener Art und Weise angeschlossen wird, um das Deponiermittel senkrecht zu einer Fluidstromrichtung im Fluidstrom präsentieren zu können. Dies kann beispielsweise über bereits beschriebene und/oder beanspruchte Führungsmittel erfolgen. Der Kontakt zwischen dem Nährmedium und dem Deponiermittel kann ferner ebenfalls über bereits beschriebene und/oder beanspruchte Führungsmittel und/oder Kontaktierungsmittel, wie bereits beschrieben, ermöglicht werden, wodurch bereits beschriebene Merkmale realisiert werden können.

Bei einer weiteren vorteilhaften Ausgestaltung der Erfindung kann vorgesehen sein, dass der oder ein bewegbarer Gehäuseabschnitt des abgegrenzten Bereichs mit einer flexiblen Dichtung verbunden ist.

Dabei kann vorgesehen sein, dass der bewegbare Gehäuseabschnitt mit der flexiblen Dichtung beweglich verbunden ist, wobei eine Bewegung der flexiblen Dichtung durch eine kraft- und/oder formschlüssige Kopplung mit dem bewegbaren Gehäuseabschnitt initiiert werden kann. Die flexible Dichtung kann dabei vorteilhafterweise einen maximalen und einen minimalen translatorischen Bewegungsraum für den bewegbaren Gehäuseabschnitt definieren.

Die flexible Dichtung ist dabei vorteilhafterweise außerhalb des oder eines Strömungswegs des Fluidstroms ausgebildet.

Aufgrund der flexiblen Dichtung kann somit überaus vorteilhaft der abgegrenzte und/oder dekontaminierbare Bereich von der Außenwelt abgegrenzt werden, wodurch wiederum verhindert werden kann, dass mikrobiologische Verunreinigungen in den abgegrenzten und/oder dekontaminierbaren Bereich von Außen eindringen.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe bei einem Verfahren der eingangs beschriebenen Art erfindungsgemäß vorgeschlagen, dass der abgegrenzte Bereich dekontaminierbar ist.

Besonders vorteilhaft kann der abgegrenzte Bereich somit beispielsweise unabhängig von der kontrollierten Umgebung dekontaminiert werden. Ist beispielsweise geplant, dass ein laufender Prozess innerhalb der kontrollierten Umgebung länger dauert als die Überwachung auf mikrobiologische Verunreinigungen von einem einzigen Deponiermittel ermöglicht werden kann (circa acht Stunden kann ein Deponiermittel benutzt werden, bevor dieses austrocknet und/oder nicht mehr zu gebrauchen ist), kann ein neues Deponiermittel in den abgegrenzten Bereich eingebracht und dieser zuvor, ohne den Prozess innerhalb der kontrollierten Umgebung zu unterbrechen, dekontaminiert werden. Ein besonderer Vorteil ist somit, dass die gekapselte Einheit ausgetauscht werden kann, ohne einen Prozess innerhalb der kontrollierten Umgebung zur Durchführung einer Dekontamination zu unterbrechen.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe bei einem Verfahren der eingangs beschriebenen Art erfindungsgemäß vorgeschlagen, dass das Deponiermittel nach einer Exponierung im Fluidstrom im abgegrenzten Bereich mit einem Nährmedium in Kontakt gebracht wird.

Bei den in diesem Anspruch definierten Merkmalen kann es sich um bereits beschriebene und/oder beanspruchte Merkmale handeln.

Besonders vorteilhaft ist es somit nicht notwendig, dass das Nährmedium selbst und somit aktiv mit dem Fluidstrom in Kontakt gebracht wird, wodurch wiederum ein Kontaminationsrisiko dadurch dezimiert werden kann, dass zum Überprüfen auf mikrobiologische Verunreinigungen mittels Nährmedium keine an die kontrollierte Umgebung angrenzende Schnittstelle zum Ein- und/oder Ausbringen des Nährmediums geöffnet werden muss, über die Verunreinigungen von außerhalb in die kontrollierte Umgebung gelangen können. Ferner erfolgt die Kontaktierung zwischen Deponiermittel und Nährmedium nicht in der kontrollierten Umgebung selbst, sodass die Überwachung von mikrobiologischen Verunreinigungen ohne Unterbrechung eines innerhalb der kontrollierten Umgebung durchgeführten Prozesses erfolgen kann.

Bei einer weiteren vorteilhaften Ausgestaltung der Erfindung kann vorgesehen sein, dass das Deponiermittel während der Exponierung außerhalb der kontrollierten Umgebung angeordnet ist.

Das Deponiermittel kann dabei, wie bereits beschrieben, außerhalb der kontrollierten Umgebung im abgegrenzten Bereich von dem Fluidstrom passiert werden, wodurch sich bereits beschriebene Vorteile ergeben.

Bei einer weiteren vorteilhaften Ausgestaltung kann vorgesehen sein, dass das Nährmedium und/oder das Deponiermittel zur Kontaktierung zumindest teilweise entlang einer Kontaktierungsrichtung bewegt werden.

Besonders vorteilhaft kann somit eine verbesserte Kontaktierung zwischen Nährmedium und Deponiermittel ermöglicht werden. Dabei kann beispielsweise vorgesehen sein, dass das Nährmedium und/oder das Deponiermittel federnd gelagert sind, wobei auch weitere das Deponiermittel und/oder das Nährmedium ausfahrbare Techniken, beispielsweise mittels Drehen und/oder Drücken, vorgesehen sein können.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe bei einem Verfahren der eingangs beschriebenen Art erfindungsgemäß vorgeschlagen, dass das Deponiermittel nach der oder einer Exponierung im Fluidstrom im abgegrenzten und/oder dekontaminierbaren Bereich mit dem oder einem Nährmedium definiert, insbesondere geführt, in Kontakt gebracht wird.

Bei den im Anspruch definierten Merkmalen kann es sich um bereits beschriebene und/oder beanspruchte Merkmale handeln.

Besonders vorteilhaft kann somit erreicht werden, dass die Kontaktierung zwischen Deponiermittel und Nährmedium in kontrollierter Weise erfolgt, so dass auch sichergestellt werden kann, dass der Kontakt ausreicht, um mikrobiologische Verunreinigungen überhaupt von dem Deponiermittel auf das Nährmedium zu übertragen.

Hierbei kann beispielsweise vorgesehen sein, dass bereits beschrieben und/oder beanspruchte Kontaktierungsmittel und/oder Führungsmittel in bereits beschriebener Art und Weise zur Kontaktierung verwendet werden.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe bei einem Verfahren der eingangs beschriebenen Art erfindungsgemäß vorgeschlagen, dass das Deponiermittel vor einer Exponierung im Fluidstrom in der oder einer gekapselten Einheit an den oder einen abgegrenzten und/oder dekontaminierbaren Bereich angedockt wird und dass die gekapselte Einheit bei der Exponierung einen Abschnitt des Fluidstroms führt.

Bei den im Anspruch definierten Merkmalen kann es sich um bereits beschriebene und/oder beanspruchte Merkmale handeln.

Das Andocken der gekapselten Einheit, also des Deckels mitsamt Grundkörper, kann dabei besonders vorteilhaft in bereits beschriebener Art und Weise insbesondere über eine BajonettVerbindung zwischen dem Grundkörper und dem Port erfolgen, wobei gleichzeitig der Deckel ebenfalls über eine BajonettVerbindung mit der Handhabungsvorrichtung gekoppelt wird. Bevor der Fluidstrom zum Deponiermittel geführt wird, wird der Deckel zugleich vom Grundkörper entkoppelt und, wie bereits beschrieben, in einen gesonderten Bereich der abgegrenzten und/oder dekontaminierbaren Umgebung positioniert, sodass der oder ein Fluidstromweg über den oder einen Zuführabschnitt freigelegt und der Abschnitt des Fluidstroms durch den Grundkörper geführt ist.

Besonders vorteilhaft kann somit ein Schnelles An- und Abdocken der gekapselten Einheit erfolgen. Somit kann beispielsweise nach der Kontaktierung zwischen Deponiermittel und Nährmedium die gesamte gekapselte Einheit problemlos abgekoppelt und eine neue gekapselte Einheit angekoppelt werden. Dabei kann beispielsweise auch vorgesehen sein, dass mehrere gekapselte Einheiten an den dekontaminierbaren und/oder abgegrenzten Bereich, beispielswiese über mehrere Ports, angedockt werden, um parallele Überwachungen auf mikrobiologische Verunreingungen durchführen zu können.

Bei einer weiteren vorteilhaften Ausgestaltung der Erfindung kann vorgesehen sein, dass nach dem oder einem Andocken der oder einer das Deponiermittel aufnehmenden gekapselten Einheit ein Zuführabschnitt für den Fluidstrom an die gekapselte Einheit angeschlossen wird.

Bei dem Zuführabschnitt kann es sich um den bereits beschriebenen und/oder beanspruchten Zuführabschnitt handeln.

Bei der das Deponiermittel aufnehmenden gekapselten Einheit kann es sich um den bereits beschriebenen und/oder beanspruchten Grundkörper handeln.

Dabei kann beispielsweise vorgesehen sein, dass das Anschließen des Grundkörpers an den Zuführabschnitt beispielsweise mittels dem oder einem bewegbaren Gehäuseabschnitt erfolgen kann. Besonders vorteilhaft kann somit der Fluidstrom über den Zuführabschnitt zum Deponiermittel geleitet werden.

Bei einer weiteren vorteilhaften Ausgestaltung der Erfindung kann vorgesehen sein, dass der Fluidstrom durch einen Partikelzähler zur Erfassung einer Partikelanzahl und/oder Partikelgröße geführt wird, insbesondere wobei anschließend derselbe Fluidstrom zum Deponiermittel geführt wird.

Bei dem Partikelzähler kann es sich um den oder einen, beispielsweise den bereits beschriebenen und/oder beanspruchten, Partikelzähler handeln. Wie bereits beschrieben kann somit vorteilhafterweise erreicht werden, dass die Überwachung auf mikrobiologische Verunreinigungen durch funktionell unterschiedliche Methoden um quantitative Angabe, beispielsweise Anzahl und/oder Größe der mikrobiologischen Verunreinigungen, ergänzt werden kann. Der Partikelzähler kann ferner beispielsweise zur genaueren Eingrenzung eines Zeitpunkts der Verunreinigung herangezogen werden.

Alternativ oder zusätzlich wird insbesondere ein Teilvolumen des Fluidstroms abgezweigt, insbesondere wobei der abgezweigte Fluidstrom an den Partikelzähler überführt wird.

Besonders vorteilhaft kann somit eine parallele Überwachung auf mikrobiologische Verunreinigungen erfolgen. Beispielsweise kann der Partikelzähler beispielsweise vorteilhafterweise auch dann genutzt werden, wenn keine gekapselte Einheit angedockt ist, beispielsweise dann, wenn gerade eine Kontaktierung zwischen Deponiermittel und Nährmedium erfolgt und der Zuführabschnitt verschlossen ist.

Alternativ oder zusätzlich kann insbesondere vorgesehen sein, dass die oder eine Abzweigung außerhalb der kontrollierten Umgebung stattfindet.

Besonders vorteilhaft kann der Partikelzähler somit außerhalb der kontrollierten Umgebung angeordnet sein, wodurch das Kontaminationsrisiko innerhalb der kontrollierten Umgebung dezimiert werden kann.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe bei einem Verfahren der eingangs beschriebenen Art erfindungsgemäß vorgeschlagen, dass der abgegrenzte Bereich vor einem Exponieren des Deponiermittels dekontaminiert wird.

Besonders vorteilhaft kann somit verhindert werden, dass, wie bereits beschrieben, der abgegrenzte Bereich unabhängig von der kontrollierten Umgebung dekontaminiert werden muss.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe bei einem Verfahren der eingangs beschriebenen Art erfindungsgemäß vorgeschlagen, dass zum Exponieren des Deponiermittels der oder ein das Deponiermittel aufnehmender Grundkörper der oder einer gekapselten Einheit über eine Koppelbewegung, insbesondere eine Drehbewegung, mit dem oder einem Port des abgegrenzten und/oder dekontaminierbaren Bereichs gekoppelt wird.

Bei den im Anspruch definierten Merkmalen kann es sich um bereits beschriebene und/oder beanspruchte Merkmale handeln.

Die Verbindung zwischen dem Grundkörper und dem Port und die Verbindung zwischen dem Grundkörper und dem Deckel kann jeweils beispielsweise von einem Bajonett-Verschluss gebildet sein. Besonders vorteilhaft kann somit eine Kopplung zwischen dem der gekapselten Einheit und dem Port mittels RTP (Rapid-Transfer-Port)- System erfolgen.

Bei einer weiteren vorteilhaften Ausgestaltung kann vorgesehen sein, dass durch dieselbe Koppelbewegung, insbesondere Drehbewegung, eine Verbindung zwischen dem Grundkörper und dem oder einem Deckel der gekapselten Einheit gelöst wird.

Besonders vorteilhaft kann somit ein Ankoppeln des Grundkörpers mit dem Port und ein insbesondere zeitgleiches Lösen der Verbindung zwischen dem Grundkörper und dem Deckel über eine einzige Bewegung ermöglicht werden.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe bei einem Verfahren der eingangs beschriebenen Art erfindungsgemäß vorgeschlagen, dass zum Exponieren des Deponiermittels der oder ein Grundkörper der oder einer gekapselten Einheit über eine Koppelbewegung, insbesondere eine Drehbewegung, mit dem oder einem Port (15) des abgegrenzten und/oder dekontaminierbaren Bereichs gekoppelt wird, wobei durch dieselbe Koppelbewegung, insbesondere Drehbewegung, eine kraft- und/oder formschlüssige Verbindung zwischen einer Tür des Ports und dem oder einem Deckel der gekapselten Einheit hergestellt wird.

Dabei kann beispielsweise vorgesehen sein, dass es sich bei der Koppelbewegung um die zuvor beschriebene und/oder beanspruchte Koppelbewegung handelt. Somit kann überaus vorteilhaft mittels einer einzigen Koppelbewegung der Grundkörper mit dem Port und der Deckel mit der Tür des Ports gekoppelt und der Deckel von dem Grundkörper entkoppelt werden.

Die Tür kann beispielsweise von der oder einer, beispielsweise der bereits beschriebenen, Handhabungsvorrichtung gebildet sein.

Somit kann in einer Kombination dieser Aspekte ein alpha- und ein beta-Port eines RTP-(Rapid Transfer Port, Schnelltransferport) System bildbar sein. Dies ist überaus vorteilhaft, da zwischen dem Wechsel der gekapselten Einheiten folglich kein Dekontaminationsvorgang der kontrollierten Umgebung, des abgegrenzten und/oder des dekontaminierbaren Bereichs erfolgen muss, da potenziell verunreinigte Oberflächen hierbei gegenseitig abgedeckt werden, so dass ein Kontaminationsrisiko minimiert ist.

Alternativ oder zusätzlich sind zur Lösung der genannten Aufgabe erfindungsgemäß die Merkmale des nebengeordneten, auf eine Verwendung gerichteten Anspruchs vorgesehen. Insbesondere wird somit zur Lösung der genannten Aufgabe bei einer Verwendung der eingangs beschriebenen Art erfindungsgemäß vorgeschlagen, dass ein bereits beanspruchtes Verfahren ausgeführt wird und/oder dass der oder ein Grundkörper von außen an den oder einen abgegrenzten und/oder dekontaminierbaren Bereich angedockt wird.

Bei den im Anspruch definierten Merkmalen kann es sich um bereits beschriebene und/oder beanspruchte Merkmale handeln.

Besonders vorteilhaft ist durch die gekapselte Einheit eine austauschbare und/oder wiederverwendbare Einheit gebildet, die zur Überwachung auf mikrobiologische Verunreinigungen problemlos mit dem abgegrenzten und/oder dekontaminierbaren Bereich, beispielsweise in bereits beschriebene und/oder beanspruchter Art und Weise, gekoppelt werden kann.

Bei einer weiteren vorteilhaften Ausgestaltung kann vorgesehen sein, dass der oder ein Deckel der gekapselten Einheit nach dem Andocken über den oder einen Port, vorzugsweise nach innen, entnommen wird.

Hierdurch kann besonders vorteilhaft das oder ein von dem Deckel abdeckendes Deponiermittel exponiert werden. Nach innen kann bedeuten, dass der Deckel innerhalb des abgegrenzten und/oder dekontaminierbaren Bereichs entnommen wird.

Bei einer weiteren vorteilhaften Ausgestaltung der Erfindung kann vorgesehen sein, dass beim Andocken ein Fluidauslass des Grundkörpers an eine Fluidauslassleitung, insbesondere eine Saugleitung, angeschlossen wird.

Dies kann besonders vorteilhaft durch die bereits beschriebene und/oder beanspruchte Koppelbewegung ermöglicht werden. Besonders vorteilhaft muss somit kein weiterer Schritt zur Kopplung zwischen dem Fluidauslass an die Fluidauslassleitung erfolgen.

Alternativ oder zusätzlich sind zur Lösung der genannten Aufgabe erfindungsgemäß die Merkmale des nebengeordneten, auf eine Verwendung gerichteten Anspruchs vorgesehen. Insbesondere wird somit zur Lösung der genannten Aufgabe erfindungsgemäß die Verwendung einer Tür eines Ports zur Handhabung, insbesondere zum Transport, eines Objekts, das in einer an den Port ankoppelbaren gekapselten Einheit angeordnet ist.

Bei den definierten Merkmalen kann es sich um bereits beschriebene und/oder beanspruchte Merkmale handeln. Besonders vorteilhaft kann das Objekt, insbesondere das oder ein Nährmedium und/oder das oder ein Deponiermittel, über die Tür, die vorzugsweise einen Zugang, insbesondere den Port, zum abgegrenzten und/oder dekontaminierbaren Bereich öffnet oder verschließt, bewegt werden. Dabei kann beispielsweise vorgesehen sein, dass die Tür schwenkbar ist und den Deckel in bereits beschriebener Art und Weise aufnimmt, wodurch das Deponiermittel im Grundkörper der gekapselten Einheit exponiert werden kann. Ferner kann vorgesehen sein, dass die Tür Linearbewegung durchführt, um den Deckel aus einem Fluidstromweg zu bewegen und den Port freizugeben und umgekehrt.

Bei einer weiteren vorteilhaften Ausgestaltung der Erfindung kann vorgesehen sein, dass die Tür eine Handhabungsvorrichtung ist.

Besonders vorteilhaft können somit bereits beschriebene Vorteile der Handhabungsvorrichtung erreicht werden.

Erfindungsgemäß wird weiter eine Verwendung eines Deckels einer gekapselten Einheit zur Handhabung, insbesondere zum Transport, eines Objekts, insbesondere eines Nährmediums und/oder eines Deponiermittels, das in der vorzugsweise an einen Port einer kontrollierten Umgebung ankoppelbaren gekapselten Einheit angeordnet ist. Hierzu kann es günstig sein, wenn das Objekt unverlierbar an dem Deckel angeordnet ist. Von Vorteil ist bei dieser Verwendung, dass ein Greifen des Objekts, das immer das Risiko einer Beschädigung birgt, vermeidbar ist.

Erfindungsgemäß wird weiter eine Verwendung eines Grundkörpers einer gekapselten Einheit zur Handhabung, insbesondere zur Bereitstellung, eines Objekts, insbesondere eines Nährmediums und/oder eines Deponiermittels, das in der vorzugsweise an einen Port einer kontrollierten Umgebung ankoppelbaren gekapselten Einheit angeordnet ist. Hierzu kann es günstig sein, wenn das Objekt unverlierbar an dem Grundkörper angeordnet ist. Von Vorteil ist bei dieser Verwendung, dass ein Greifen des Objekts oder sonstiges Handhaben, das immer das Risiko einer Beschädigung birgt, vermeidbar ist, da das Objekt gleich in seiner Gebrauchsstellung bereitstellbar ist.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt, in jeweils stark vereinfachter Darstellung,
- Fig. 1: eine dreidimensionale Schnittdarstellung einer Vorrichtung zur Überwachung von mikrobiologischen Verunreinigungen in einer kontrollierten Umgebung,
- Fig. 2: eine dreidimensionale Darstellung einer gekapselten Einheit mit Deckel und Grundkörper,
- Fig. 3: eine dreidimensionale Schnittdarstellung der gekapselten Einheit gemäß Fig. 2, wobei ein Nährmedium gekapselt im Deckel angeordnet ist,
- Fig. 4: eine dreidimensionale Schnittdarstellung einer gekapselten Einheit, wobei ein das Nährmedium abdeckender Verschluss des Deckels entfernt ist,
- Fig. 5: eine dreidimensionale Darstellung der gekapselten Einheit, wobei Deckel und Grundkörper voneinander gelöst sind,
- Fig. 6: eine dreidimensionale Schnittdarstellung der gekapselten Einheit gemäß Fig. 5, wobei das Nährmedium im Deckel gekapselt ist,
- Fig. 7: eine dreidimensionale Schnittdarstellung der gekapselten Einheit gemäß Fig. 6, wobei der das Nährmedium abdeckender Verschluss entfernt ist,
- Fig. 8: eine dreidimensionale Schnittdarstellung der gekapselten Einheit nach einer Kontaktierung zwischen Nährmedium und Deponiermittel,
- Fig. 9: eine dreidimensionale Schnittdarstellung der Vorrichtung zur Überwachung auf mikrobiologische Verunreinigungen in einem ersten Verfahrensschritt,
- Fig. 10: eine dreidimensionale Schnittdarstellung der Vorrichtung zur Überwachung auf mikrobiologische Verunreinigungen in einem zweiten Verfahrensschritt,
- Fig. 11: eine dreidimensionale Schnittdarstellung der Vorrichtung zur Überwachung auf mikrobiologische Verunreinigungen in einem dritten Verfahrensschritt,
- Fig. 12: eine dreidimensionale Schnittdarstellung der Vorrichtung zur Überwachung auf mikrobiologische Verunreinigungen in einem vierten Verfahrensschritt,
- Fig. 13: eine dreidimensionale Schnittdarstellung der Vorrichtung zur Überwachung auf mikrobiologische Verunreinigungen in einem fünften Verfahrensschritt,
- Fig. 14: eine dreidimensionale Schnittdarstellung der Vorrichtung zur Überwachung auf mikrobiologische Verunreinigungen in einem sechsen Verfahrensschritt,
- Fig. 15: eine dreidimensionale Schnittdarstellung der Vorrichtung zur Überwachung auf mikrobiologische Verunreinigungen in einem siebten Verfahrensschritt,
- Fig. 16: eine dreidimensionale Schnittdarstellung der Vorrichtung zur Überwachung auf mikrobiologische Verunreinigungen in einem achten Verfahrensschritt,
- Fig. 17: eine dreidimensionale Schnittdarstellung der Vorrichtung zur Überwachung auf mikrobiologische Verunreinigungen in einem neunten Verfahrensschritt,
- Fig. 18: eine dreidimensionale Schnittdarstellung der Vorrichtung zur Überwachung auf mikrobiologische Verunreinigungen in einem zehnten Verfahrensschritt,
- Fig. 19: eine dreidimensionale Schnittdarstellung der Vorrichtung zur Überwachung auf mikrobiologische Verunreinigungen in einem elften Verfahrensschritt,
- Fig. 20: eine dreidimensionale Schnittdarstellung der Vorrichtung zur Überwachung auf mikrobiologische Verunreinigungen in einem zwölften Verfahrensschritt,
- Fig. 21: eine dreidimensionale Schnittdarstellung der Vorrichtung zur Überwachung auf mikrobiologische Verunreinigungen in einem dreizehnten Verfahrensschritt,
- Fig. 22: eine dreidimensionale Schnittdarstellung der Vorrichtung zur Überwachung auf mikrobiologische Verunreinigungen in einem vierzehnten Verfahrensschritt,
- Fig. 23: eine dreidimensionale Schnittdarstellung der Vorrichtung zur Überwachung auf mikrobiologische Verunreinigungen in einem fünfzehnten Verfahrensschritt,
- Fig. 24: eine dreidimensionale Schnittdarstellung der Vorrichtung zur Überwachung auf mikrobiologische Verunreinigungen in einem sechszehnten Verfahrensschritt,
- Fig. 25: eine dreidimensionale Schnittdarstellung der Vorrichtung zur Überwachung auf mikrobiologische Verunreinigungen in einem siebzehnten Verfahrensschritt,
- Fig. 26: eine dreidimensionale Schnittdarstellung der Vorrichtung zur Überwachung auf mikrobiologische Verunreinigungen in einem achtzehnten Verfahrensschritt,
- Fig. 27: eine zweidimensionale Darstellung einer kontrollierten Umgebung, wobei die Vorrichtung zur Überwachung auf mikrobiologische Verunreinigungen an der kontrollierten Umgebung angeordnet ist,
- Fig. 28: eine zweidimensionale Darstellung einer kontrollierten Umgebung, wobei die Vorrichtung zur Überwachung auf mikrobiologische Verunreinigungen separiert von der kontrollierten Umgebung ausgebildet ist,
- Fig. 29: eine zweidimensionale Darstellung einer kontrollierten Umgebung, in der die Vorrichtung zur Überwachung auf mikrobiologische Verunreinigungen angeordnet ist.
- Fig. 30: eine zweidimensionale Darstellung einer weiteren erfindungsgemäßen Vorrichtung zum Überwachen von mikrobiologischen Verunreinigungen,
- Fig. 31: eine dreidimensionale Darstellung einer erfindungsgemäßen gekapselten Einheit mit Drehknopf,
- Fig. 32: ein Blockdiagramm zur Darstellung von Verfahrensschritten eines möglichen Verfahrens zur Überwachung von mikrobiologischen Verunreinigungen in einer kontrollierten Umgebung,
- Fig. 33: ein Blockdiagramm zur Darstellung von Verfahrensschritten eines möglichen Verfahrens zur Überwachung von mikrobiologischen Verunreinigungen in einer kontrollierten Umgebung,
- Fig. 34: ein Blockdiagramm zur Darstellung von Verfahrensschritten eines möglichen Verfahrens zur Überwachung von mikrobiologischen Verunreinigungen in einer kontrollierten Umgebung,
- Fig. 35: ein Blockdiagramm zur Darstellung von Verfahrensschritten eines möglichen Verfahrens zur Überwachung von mikrobiologischen Verunreinigungen in einer kontrollierten Umgebung,
- Fig. 36: ein Blockdiagramm zur Darstellung von Verfahrensschritten eines möglichen Verfahrens zur Überwachung von mikrobiologischen Verunreinigungen in einer kontrollierten Umgebung,
- Fig. 37: ein Blockdiagramm zur Darstellung von Verfahrensschritten eines möglichen Verfahrens zur Überwachung von mikrobiologischen Verunreinigungen in einer kontrollierten Umgebung,
- Fig. 38: ein Blockdiagramm zur Darstellung von Verfahrensschritten eines möglichen Verfahrens zur Überwachung von mikrobiologischen Verunreinigungen in einer kontrollierten Umgebung,
- Fig. 39: ein Blockdiagramm zur Darstellung von Verfahrensschritten eines möglichen Verfahrens zur Überwachung von mikrobiologischen Verunreinigungen in einer kontrollierten Umgebung,
- Fig. 40: ein Blockdiagramm zur Darstellung von Verfahrensschritten eines möglichen Verfahrens zur Überwachung von mikrobiologischen Verunreinigungen in einer kontrollierten Umgebung.

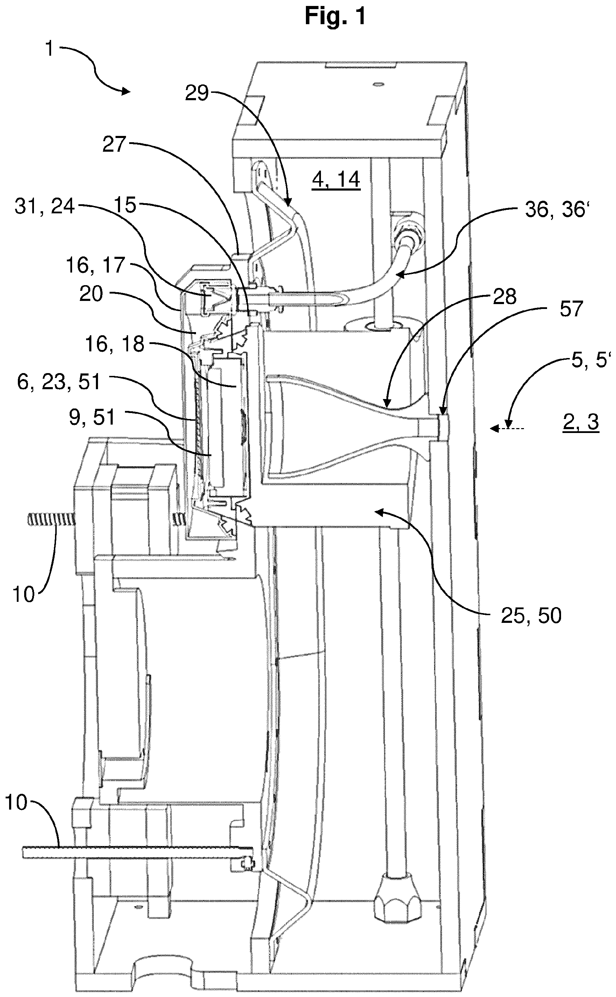

Figur 1 zeigt eine im Ganzen mit 1 bezeichnete Vorrichtung zur Überwachung von mikrobiologischen Verunreinigungen in einer kontrollierten Umgebung 2.

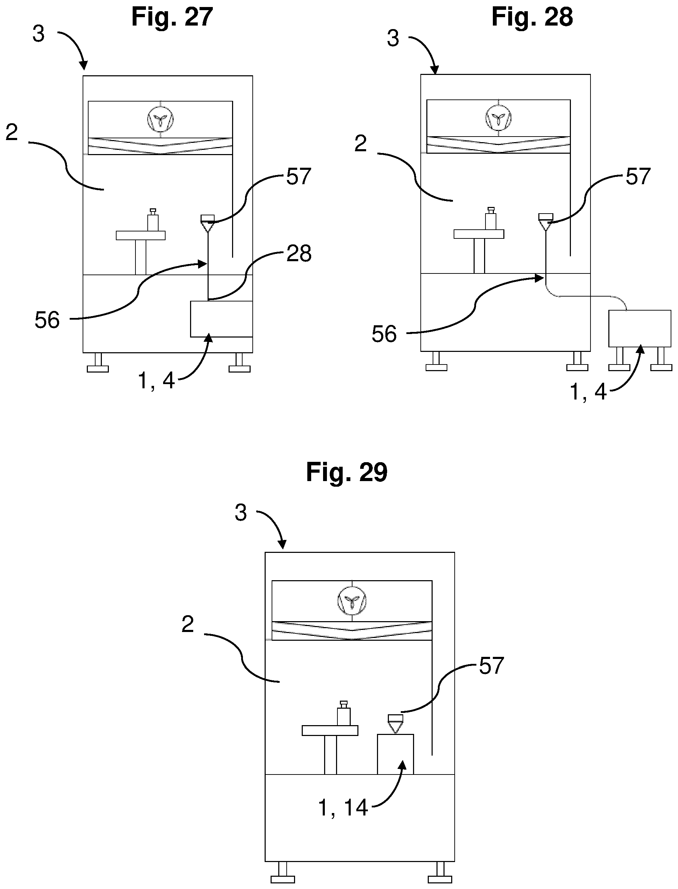

Im dargestellten Ausführungsbeispiel handelt es sich bei der kontrollierten Umgebung 2 um einen Isolator 3, an dessen Außenbegrenzung die Vorrichtung 1 angeordnet ist, wie beispielsweise auch in Figur 27 gezeigt. Die Vorrichtung 1 kann bei weiteren Ausführungsbeispielen auch entfernt von der kontrollierten Umgebung angeordnet sein oder einen Teil der kontrollierten Umgebung bilden.

Die Vorrichtung 1 gemäß Figur 1 hat einen von der kontrollierten Umgebung 2 abgegrenzten Bereich 4 mit einem Zuführabschnitt 28 für einen Fluidstrom 5, hier Luftstrom 5', der aus der kontrollierten Umgebung 2 über eine Absaugstelle 57 abführbar ist. Der abgegrenzte Bereich 4 entspricht im gezeigten Ausführungsbeispiel einem dekontaminierbaren Bereich 14. Der abgegrenzte Bereich 4r lässt sich dabei unabhängig von oder zusammen mit der kontrollierten Umgebung 2 dekontaminieren.

Bei weiteren Ausführungsbeispielen ist der dekontaminierbare Bereich Teil der kontrollierten Umgebung, und die Abgrenzung entfällt.

Der dekontaminierbare Bereich 14 in Figur 1, beziehungsweise der abgegrenzte Bereich 4, hat hierbei einen Port 15, an den ein Grundkörper 17 einer gekapselten Einheit 16 andockbar ist. Ferner hat die gekapselte Einheit 16 einen über den Port 15 abnehmbaren Deckel 18, der von einer bewegbaren Tür 50, hier Handhabungsvorrichtung 25, über den Port 18 aufgenommen werden kann.

Der Grundkörper 17 nimmt ein Objekt 51, hier ein von dem Fluidstrom 5 passierendes Deponiermittel 6 auf, wobei der Deckel 18 ein weiteres Objekt 51, hier ein federnd gelagertes und/oder gestütztes Nährmedium 9 aufnimmt.

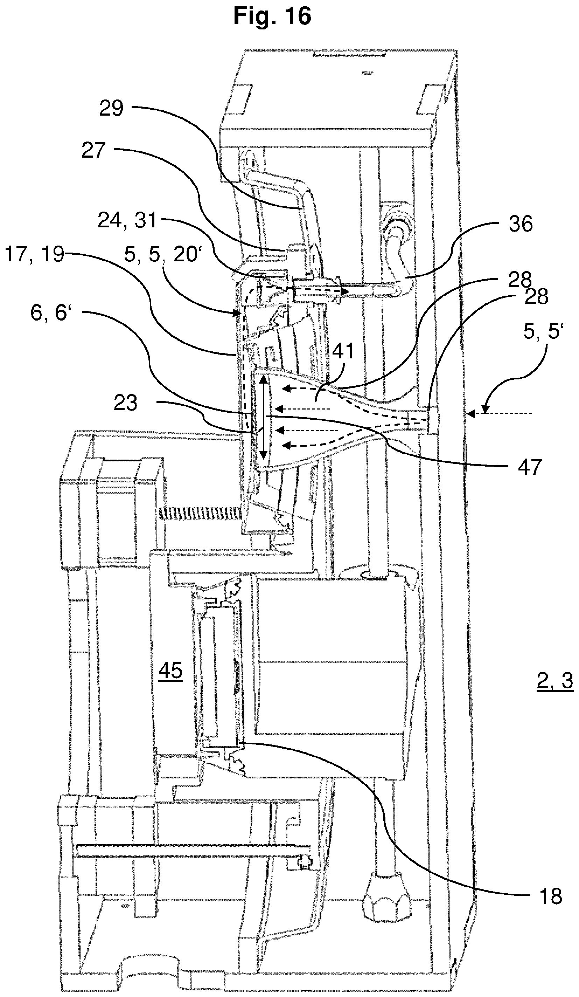

In einer Gebrauchsstellung 19 führt der Grundkörper 17 einen Abschnitt 20 des Fluidstroms 5, wobei der Abschnitt 20 des Fluidstroms 5, wie beispielsweise im Ausführungsbeispiel gemäß Fig. 16 nochmals eingehender gezeigt und beschrieben, durch den Port 15 zum Deponiermittel 6 geführt ist.

Es kann somit gesagt werden, dass der Fluidstrom 5 in der Gebrauchsstellung des Grundkörpers 17 in dem dekontaminierbaren und/oder abgegrenzten Bereich 4, 14 das Deponiermittel 6 passiert.

Der Port 15 ist hierbei ferner Bestandteil eines bewegbaren Gehäuseabschnitts 27 des abgegrenzten Bereichs 4, wobei der bewegbare Gehäuseabschnitt 27 beispielsweise über einen nicht näher dargestellten Motor von außerhalb des abgegrenzten Bereichs 4 antreibbar und über Führungsmittel 10 führbar ist, wie weiter unten nochmals eingehender spezifiziert. Der bewegbare Gehäuseabschnitt 27 ist wiederum fest mit einer flexiblen Dichtung 29 verbunden, die einen translatorischen Bewegungsraum des bewegbaren Gehäuseabschnitts 27 definiert und/oder begrenzt.

Der bewegbare Gehäuseabschnitt 27 umgreift den Grundkörper 17 der gekapselten Einheit 16 zumindest abschnittsweise.

Die gekapselte Einheit 16, hier der Grundkörper 17, bildet ferner eine fluiddurchlässige Anlagestelle 23 für das Deponiermittel 6 aus. Die gekapselte Einheit 16, im dargestellten Ausführungsbeispiel ebenfalls der Grundkörper 17, hat ferner einen Fluidauslass 31 mit einem Rücklaufsperrventil 24. Es kann gesagt werden, dass die gekapselte Einheit 16 im Abschnitt 20 des Fluidstroms 5 ein Rücklaufsperrventil 24 hat.

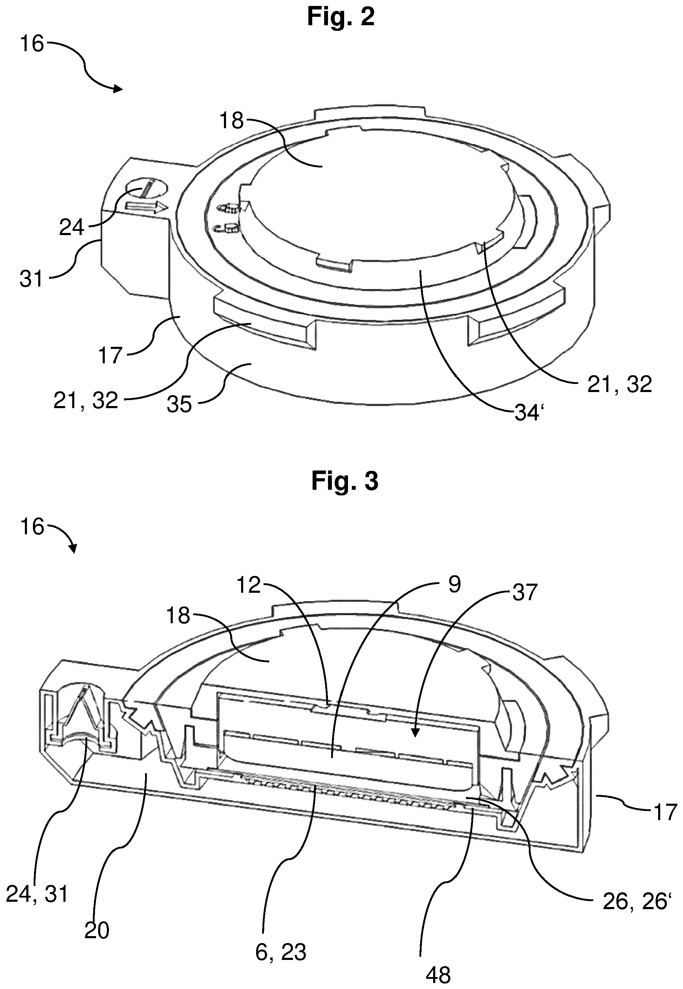

Figur 2 zeigt die gekapselte Einheit 16, wobei der Deckel 18 mit dem Grundkörper 17 gekoppelt ist. Funktionell und/oder konstruktiv zu dem vorgehenden Ausführungsbeispiel gleichartige oder identische Bauteile und Funktionseinheiten sind mit denselben Bezugszeichen bezeichnet und nicht noch einmal gesondert beschrieben.

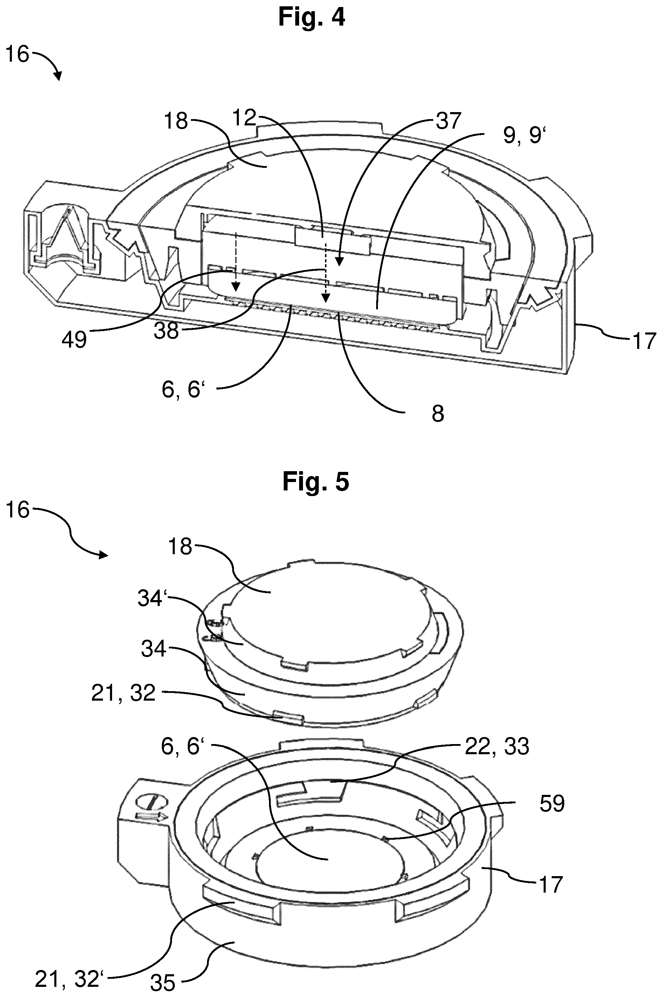

Wie auch aus Figur 5 ersichtlich, in welcher der Deckel 18 von dem Grundkörper 17 gelöst ist, weist der Deckel 18 an einem äußeren, sich radial nach innen erstreckenden Außenumfang 34 Koppelelemente 21, hier Vorsprünge 32 auf, die mit Gegenkoppelelementen 22, hier Aussparungen 33, insbesondere Längs- und Querschlitzen, am Grundkörper 17 zusammenwirken, wodurch Grundkörper 17 und Deckel 18 über eine Drehbewegung koppelbar und entkoppelbar sind. Hierdurch wird ein Bajonett-Verschluss ermöglicht.

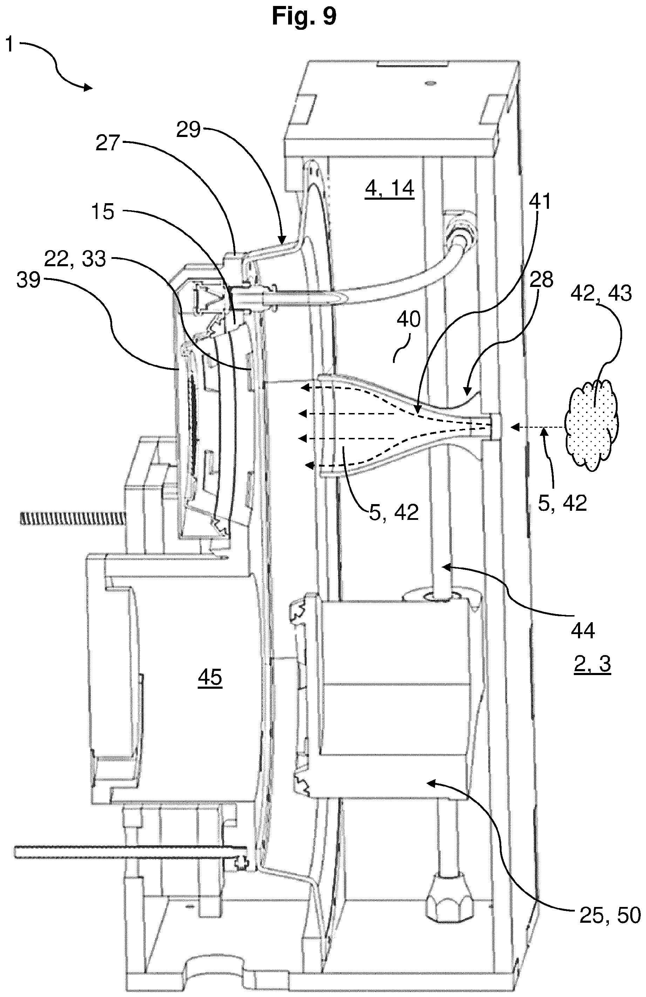

Ferner ist in Figur 2 gezeigt, dass der Grundkörper 17 an einem Außenumfang 35 ebenfalls als Koppelelemente 21, ausgebildete Vorsprünge 32 aufweist, die, wie in Fig. 9 dargestellt, mit Gegenkoppelelementen 22, hier Aussparungen 33, am Port 15 des bewegbaren Gehäuseabschnitts 27 zusammenwirken können, wodurch ebenfalls ein Bajonett-Verschluss zwischen Port 15 und der gekapselten Einheit 16 ermöglicht werden kann.

Darüber hinaus ist in Figur 2 und 5 ersichtlich, dass der Deckel 18 an einem weiteren Außenumfangsabschnitt 34' weitere Koppelelemente 21 aufweist, die mit Gegenkoppelelementen 22 an der Handhabungsvorrichtung 25 derart zusammenwirken können, dass ebenfalls ein Bajonett-Verschluss gebildet ist.

Es kann somit gesagt werden, dass das Deponiermittel 6 vor einer Exponierung im Fluidstrom (Figur 16) in der gekapselten Einheit 16 an den dekontaminierbaren und/oder abgegrenzten Bereich 4, 14 angedockt wird.

Ferner zeigt sich am Außenumfang 35 des Grundkörpers 17 der Fluidauslass 31 mit Rücklaufsperrventil 24. Der Fluidauslass 31 der gekapselten Einheit 16 kann mit einer in Figur 1 näher dargestellten Fluidauslassleitung 36, gemäß Figur 1 einer Saugleitung 36', verbunden werden, um den Fluidstrom 5 weiterleiten zu können. Das Deponiermittel 6, hier das Gelatine-Blättchen 6' ist ferner über Haken 59 am Außenumfang der Anlagestelle 23 unverlierbar von dem Grundkörper 17 aufgenommen.

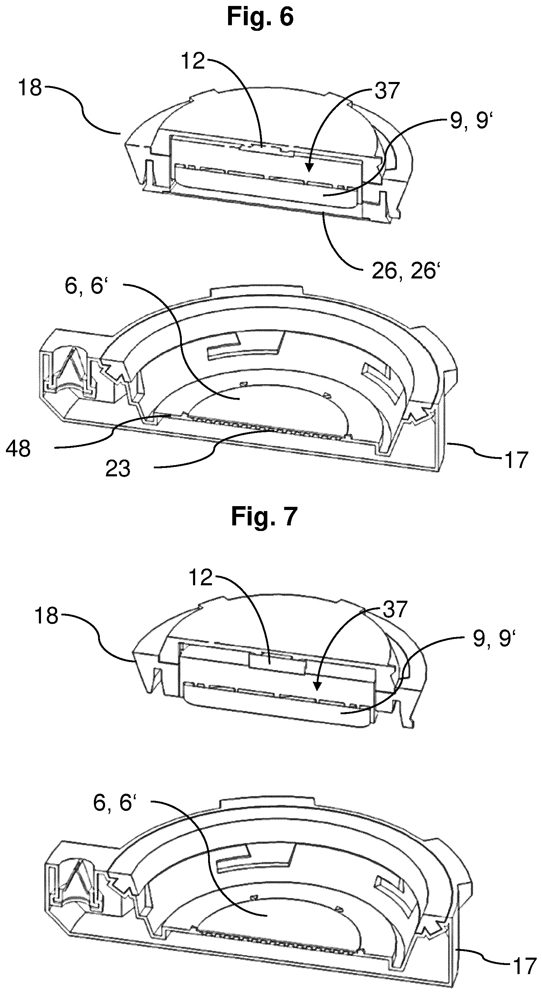

Figur 3 und 6 zeigen die gekapselte Einheit 16 gemäß Fig. 2 und 5 in einer Schnittdarstellung. Das Deponiermittel 6 befindet sich im Grundkörper 17, wobei das Nährmedium 9 im Deckel 18 angeordnet ist und von einem Verschluss 26, hier einem Nährmediumsverschluss 26', des Deckels 18 verschlossen ist. Das Nährmedium 9 wird im Deckel 18 von einem Nährmediumsträger 37 unverlierbar aufgenommen, wobei der Nährmediumsträger 37 im Deckel 18 von einem federnden Element 12 abgestützt ist. Solange der Nährmediumsverschluss 26' den Deckel 18 verschließt, wird das federnde Element 12 mitsamt Nährmediumsträger 37 und Nährmedium 9 vorgespannt. Eine Unterlage, auf der das Deponiermittel 6 präsentiert wird, bilden Präsentationsmittel 48, zu der auch die fluiddurchlässige Anlagestelle 23 gehört.

Figur 3 zeigt die gekapselte Einheit 16 hierbei in einer Gesamtheit in der Schnittdarstellung, in der der Deckel 18 und der Grundkörper 17 in bereits beschriebener Art und Weise miteinander gekoppelt sind. Die in Figur 3 dargestellte gekapselte Einheit 16 könnte wie dargestellt an dem Port 15 angedockt und ein Verfahren zur Überwachung auf mikrobiologische Verunreinigungen gestartet werden. In Figur 6 sind der Grundkörper 17 und der Deckel 18 voneinander gelöst. Es zeigt sich, analog zu Figur 3, dass der Deckel 18 mitsamt Nährmediumsträger 37 und Nährmedium 9 über das federnde Element 12 vorgespannt und von dem Nährmediumsverschluss 26' verschlossen ist. Das Nährmedium 9 und das Deponiermittel 6 sind, wenn Grundkörper 17 und Deckel 18 miteinander gekoppelt sind, durch den Nährmediumsverschluss 26' räumlich voneinander getrennt.

In Figur 6 wird nochmals besser dargestellt, dass der Grundkörper 17 die fluiddurchlässige Anlagestelle 23 für das Deponiermittel 6 bereitstellt und auf der das Deponiermittel 6 platziert ist.

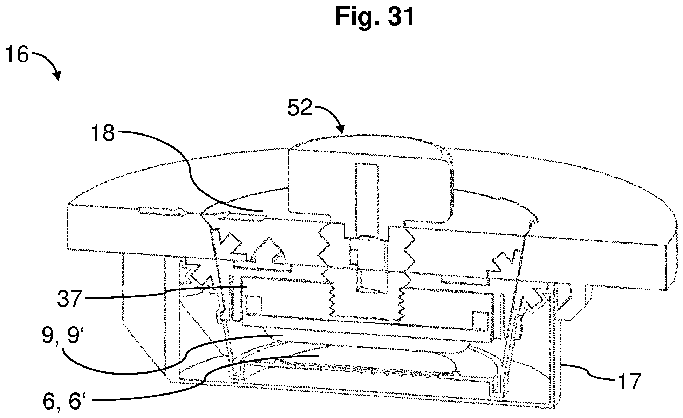

Die Figuren 4 und 7 zeigen im Unterschied zu den Figuren 3 und 6, dass der Nährmediumsverschluss 26' von dem Deckel 18 entfernt ist, wodurch eine Federrückstellkraft 38 des federnden Elements 12 dazu führt, dass der Nährmediumsträger 37 mitsamt Nährmedium 9 aus dem Deckel 18 ausgefahren werden kann. Bei einem weiteren Ausführungsbeispiel kann beispielsweise vorgesehen sein, wie in Figur 31 dargestellt, dass der Nährmediumträger 37 mitsamt Nährmedium 9 über einen Drehknopf 52 drehbar aus dem Deckel 18 ausgefahren werden kann. Dies kann händisch oder automatisch erfolgen. In weiteren, nicht näher dargestellten Ausführungsbeispielen wird alternativ oder zusätzlich das Deponiermittel 6 ausgefahren. Beispielsweise könnte vorgesehen sein, dass das Deponiermittel 6 und/oder das Nährmedium 9 über eine Kugelschreibermechanik ausgefahren und eingefahren werden kann.

Wird der Deckel 18 sodann mit dem Grundkörper 17 in bereits beschriebener Art und Weise gekoppelt, kann eine Kontaktierung 8 in Kontaktierungsrichtung 49 zwischen dem im Grundkörper 17 angeordneten Deponiermittel 6 (das bestenfalls zuvor von dem Fluidstrom 5 passiert wurde) und dem, hier federnd gelagerten Nährmedium 9, erfolgen. Es kann somit gesagt werden, dass das Nährmedium 9 und/oder das Deponiermittel 6 zur Kontaktierung 8 beweglich, hier federnd, gelagert ist/sind.

Es kann darüber hinaus gesagt werden, dass das Nährmedium 9 zur Kontaktierung 8 zumindest teilweise entlang einer Kontaktierungsrichtung 49 bewegt wird.

Als Nährmedium 9 kann dabei beispielsweise ein Agar 9' dienen, wobei das Deponiermittel 6 ein Gelatine-Plättchen 6' sein kann, das von dem Agar 9' während der Kontaktierung 8 aufgenommen wird. Besonders vorteilhaft löst sich das Gelatine-Plättchen 6' nach der Kontaktierung 8 mit dem Agar 9' auf.

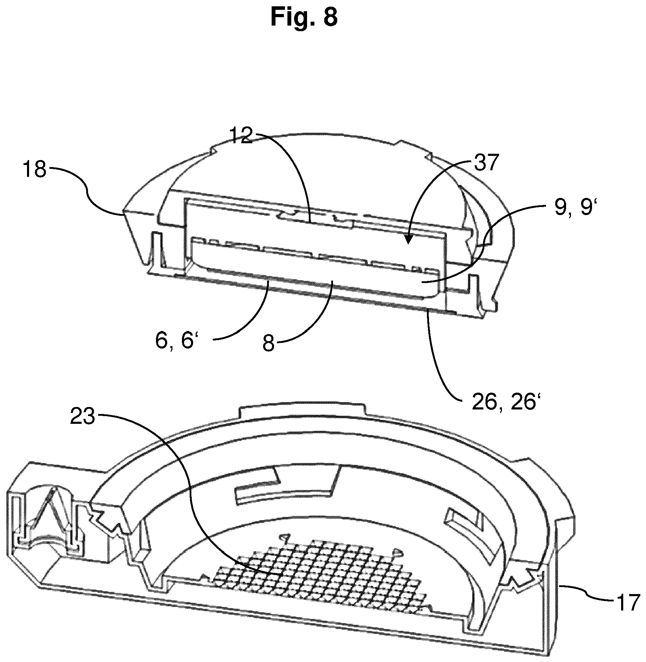

Figur 8 stellt dar, dass das Deponiermittel 6 nach der Kontaktierung 8 mit dem Nährmedium 9 nicht mehr im Grundkörper 17 angeordnet, sondern vom Nährmedium 9 aufgenommen wurde, wobei der Deckel 17 sodann durch den Nährmediumsverschluss 26' wieder verschlossen wird. In Figur 8 ist ferner nochmals deutlich die fluiddurchlässige Anlagestelle 23 erkennbar, auf den das Deponiermittel 6, hier das Gelatine-Plättchen 6', vor der Kontaktierung 8 mit dem Nährmedium 9 platziert ist.

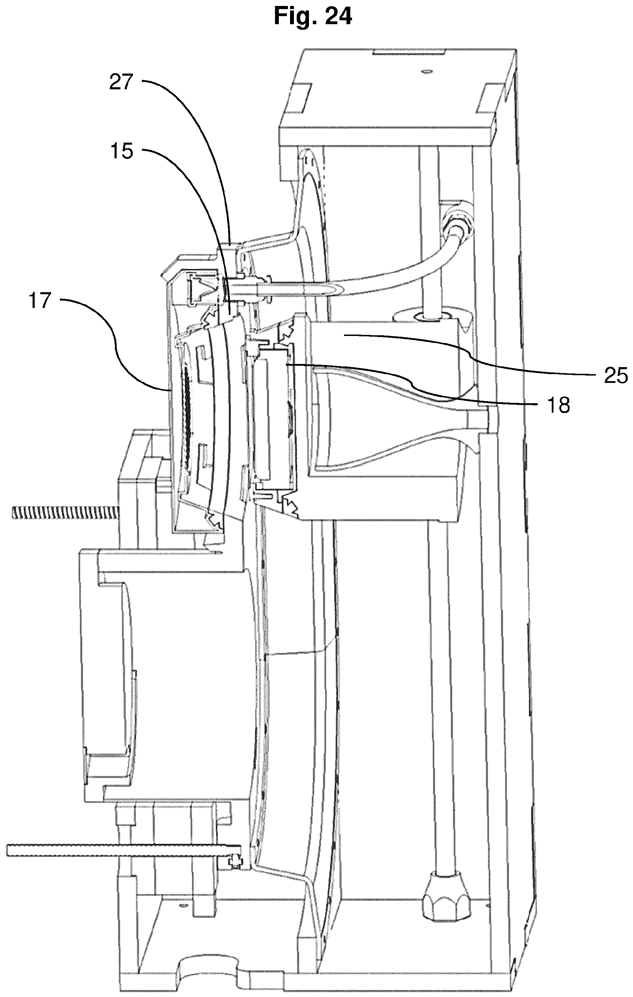

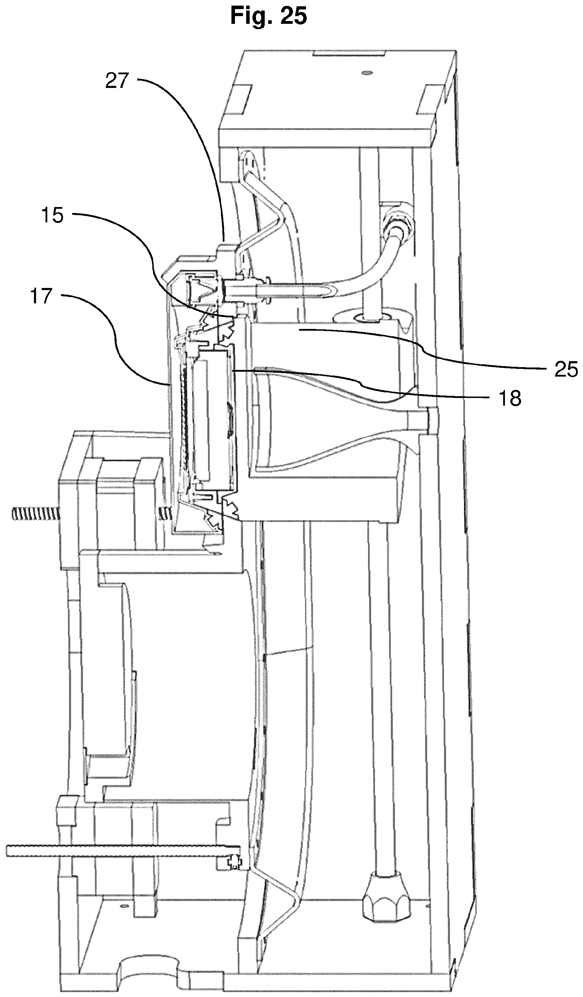

Die Figuren 9 bis 26 beschreiben ein Verfahren zum Überwachen von mikrobiologischen Verunreinigungen in der kontrollierten Umgebung 2.

Figur 9 zeigt den in Figur 1 bereits vorgestellten abgegrenzten Bereich 4. Funktionell und/oder konstruktiv zu dem vorgehenden Ausführungsbeispiel gleichartige oder identische Bauteile und Funktionseinheiten sind mit denselben Bezugszeichen bezeichnet und nicht noch einmal gesondert beschrieben.

An dem Port 15 des bewegbaren Gehäuseabschnitts 27 wird vor der Überwachung auf mikrobiologische Verunreinigungen zunächst ein Dekontaminationsgrundkörper 38 in bereits beschriebener Art und Weise angekoppelt, wobei der Dekontaminationsgrundkörper 39 in seiner Ausgestaltung dem Grundkörper 17 der gekapselten Einheit 16 entspricht. Es folgt zunächst ein Dekontaminationsvorgang 40 des abgegrenzten Bereichs 4. Es kann somit gesagt werden, dass der abgegrenzte Bereich 4 dekontaminierbar ist und dass der abgegrenzte Bereich 4 vor einem Exponieren des Deponiermittels 6 dekontaminiert wird.

Hierzu wird der bewegbare Gehäuseabschnitt 27, der mit der flexiblen Dichtung 29 gekoppelt ist, vollständig ausgefahren, sodass der Dekontaminationsgrundkörper 39 von dem Zuführabschnitt 28 beabstandet ist. Die Handhabungsvorrichtung 25 wird derart in dem abgegrenzten Bereich 4 positioniert, dass ein Fluidstromweg 41 von dem Zuführabschnitt 28 zum Dekontaminationsgrundkörper 39 freigegeben ist und nicht von diesem verschlossen wird. In die kontrollierte Umgebung 2 wird ein Dekontaminationsmittel 42, hier Wasserstoffperoxid 43, eingebracht, wobei der mit dem Dekontaminationsmittel 42 versetzte Fluidstrom 5 aus der kontrollierten Umgebung 2 abgeführt und über den Zuführabschnitt 28 in den abgegrenzten Bereich 4 eingebracht wird. Der mit dem Dekontaminationsmittel 42 versetzte Fluidstrom dekontaminiert somit sämtliche innerhalb des abgegrenzten Bereichs 4 angeordneten Elemente, wie die Handhabungsvorrichtung 25, eine die Handhabungsvorrichtung 25 führende Schiene 44, entlang dieser die Handhabungsvorrichtung 25 bewegt werden kann, den Zuführabschnitt 28 und ein gesonderter Bereich 45, der weiter unten näher spezifiziert wird. Der mit dem Dekontaminationsmittel 42 versetzte Fluidstrom 5 wird über den Dekontaminationsgrundkörper 39, der den Abschnitt 20 des Fluidstroms 5 führt, über einen Fluidauslass 31 mit dem Rücklaufsperrventil 24 und einer mit dem Fluidauslass 31 verbundenen Fluidauslassleitung 36 aus dem abgegrenzten Bereich 4 geführt. Der abgegrenzte Bereich 4 bildet sodann den dekontaminierbaren Bereich 14. Anschließend wird der Fluidstrom 5 gestoppt, der Dekontaminationsvorgang 40 ist beendet.

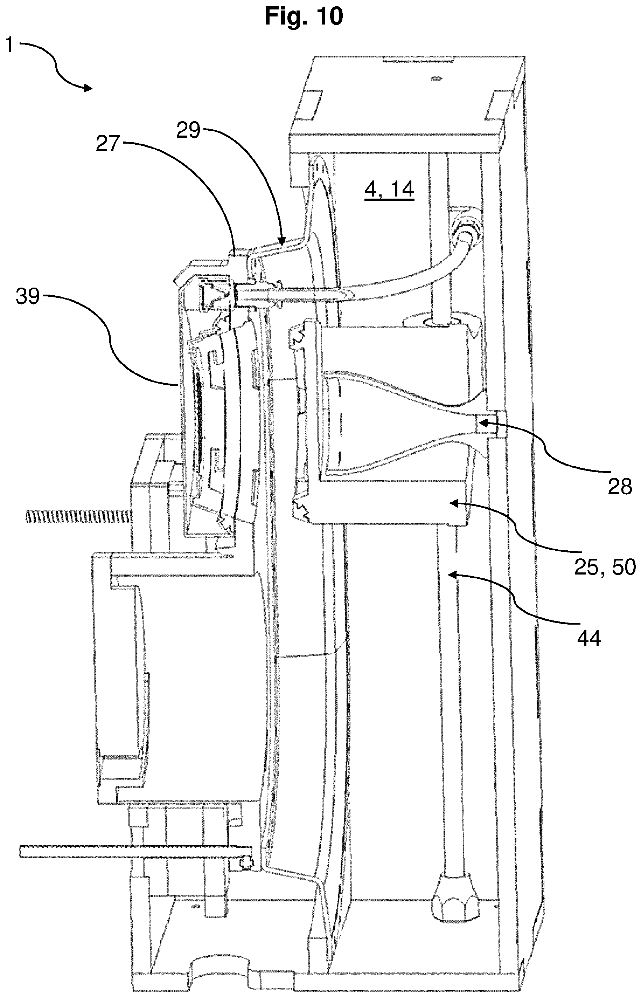

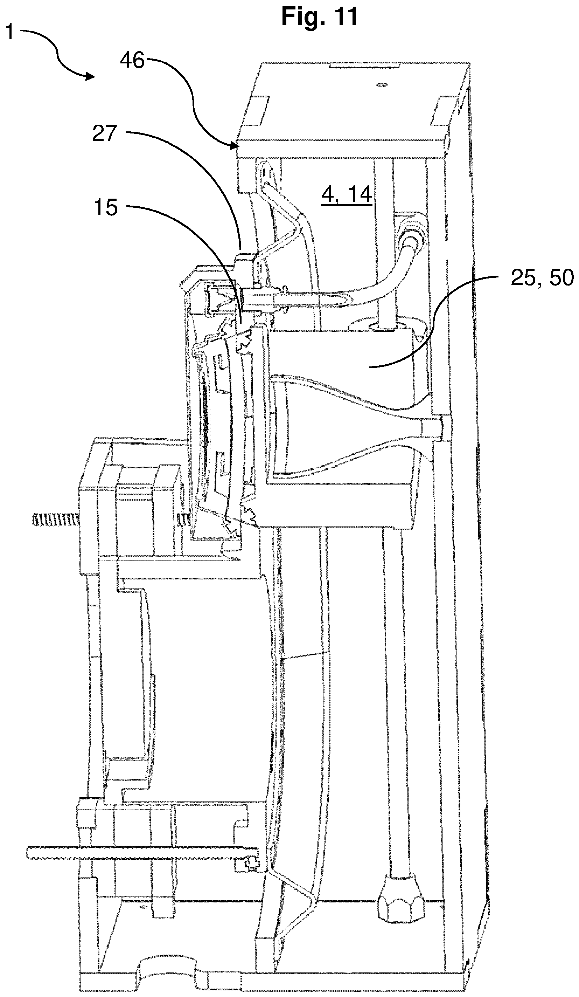

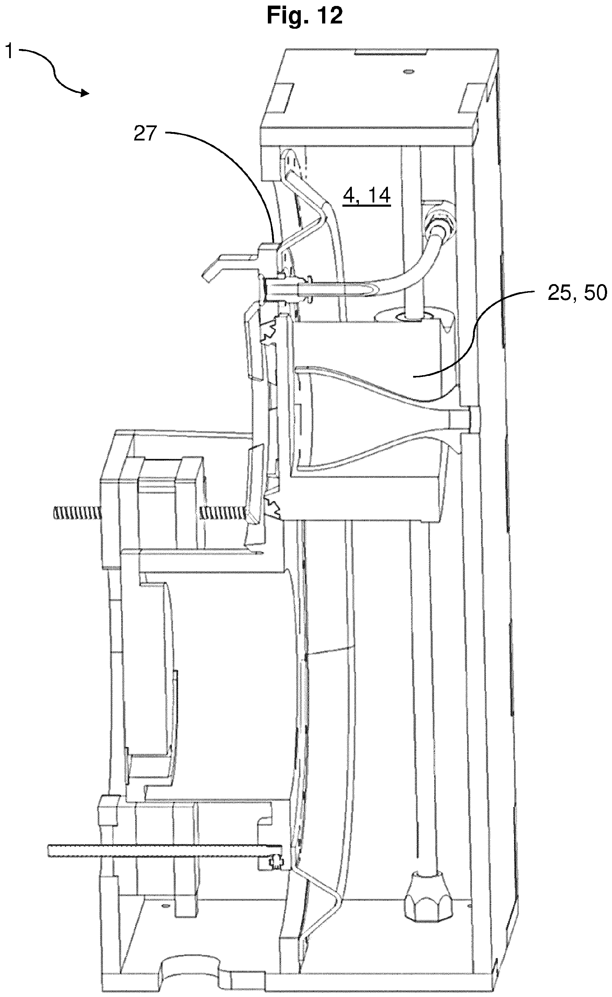

Bevor der Dekontaminationsgrundkörper 39 entfernt wird, wird die Handhabungsvorrichtung 25 entlang der Schiene 44 derart bewegt, dass diese zwischen dem Dekontaminationsgrundkörper 39 und dem Zuführabschnitt 28 positioniert ist, wie in Figur 10 dargestellt. Anschließend wird der bewegbare Gehäuseabschnitt 27 derart bewegt, dass eine äußere Begrenzung 46 des abgegrenzten Bereichs 4 auf einer Ebene mit dem bewegbaren Gehäuseabschnitt 27 ist. Der bewegbare Gehäuseabschnitt 27 befindet sich dabei in einer mittleren Position. Die Handhabungsvorrichtung 25 kann hierbei mit dem Port 15, insbesondere mittels Bajonett-Verschluss, gekoppelt werden, wie in Figur 11 dargestellt. Der abgegrenzte Bereich 4 wird somit von der Handhabungsvorrichtung 25 verschlossen. Anschließend kann der Dekontaminationsgrundkörper 39, wie in Figur 12 dargestellt, ohne Risiko einer Kontaminierung des abgegrenzten Bereichs 4 entfernt werden kann.

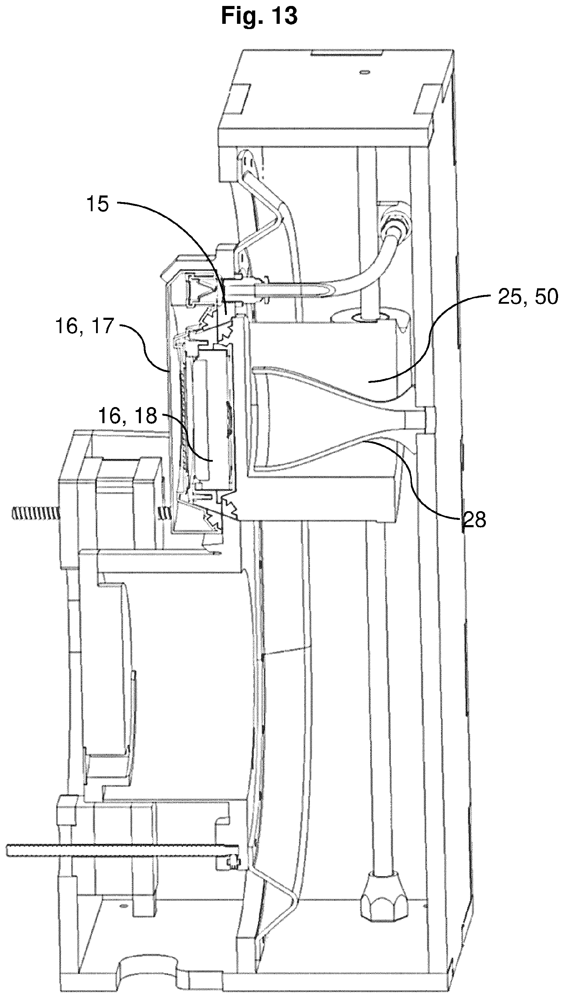

Der Grundkörper 17 der gekapselten Einheit 16, der mit dem Deckel 18 gekoppelt ist, kann anschließend, wie in Figur 13 dargestellt, in bereits beschriebener Art und Weise von außen an dem Port 15 des abgegrenzten und/oder dekontaminierbaren Bereichs 4, 14 angedockt werden. Ferner wird der Deckel 18 von der Handhabungsvorrichtung 25 über den Port 15 aufgenommen. Die mit dem Port 15 gekoppelte gekapselte Einheit 16 entspricht der in Figur 2 und 3 dargestellten gekapselten Einheit. Die Handhabungsvorrichtung 25 trennt den Zuführabschnitt 28 von der gekapselten Einheit 16.

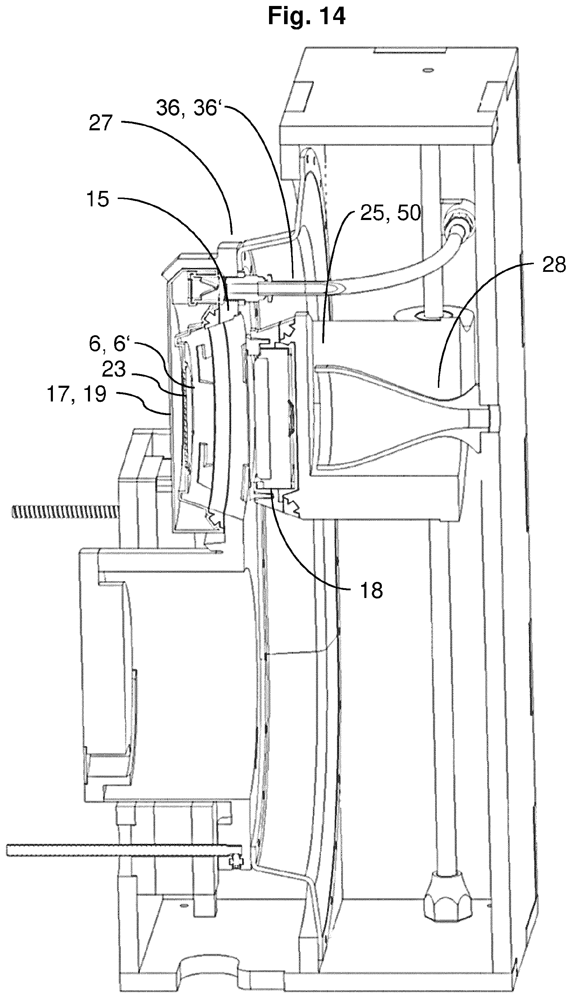

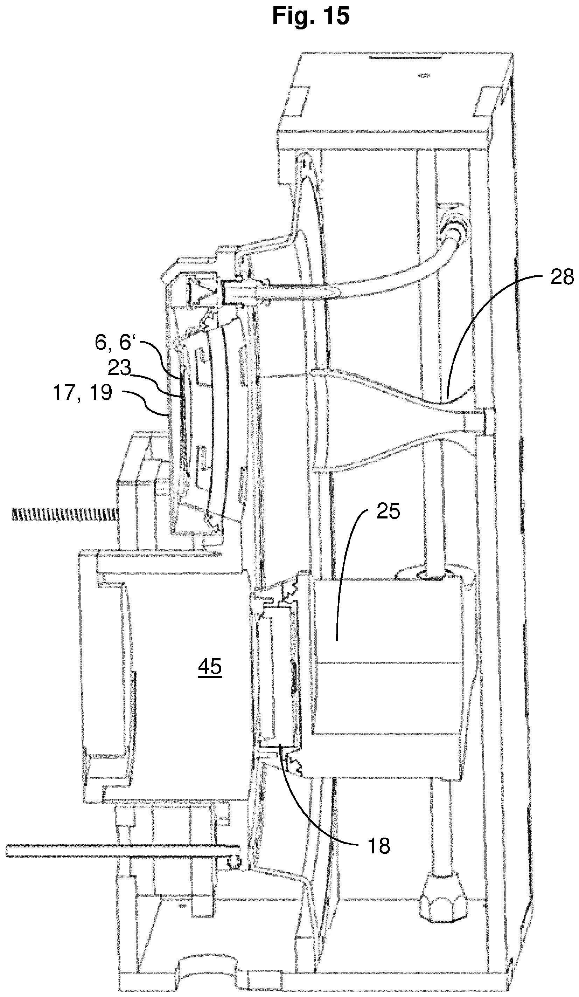

Anschließend wird der bewegbare Gehäuseabschnitt 27, wie in Figur 14 und 15 dargestellt, erneut vollständig ausgefahren, wodurch der mit der Handhabungsvorrichtung 25 gekoppelte Deckel 18 von dem Port 15 und dem Grundkörper 17 gelöst und derart entlang der Schiene 44 bewegt wird, dass die Handhabungsvorrichtung 25 mitsamt Deckel 18 nicht mehr zwischen dem Grundkörper 17 und dem Zuführabschnitt 28, sondern im gesonderten Bereich 45 positioniert ist. Das auf der fluiddurchlässigen Anlagestelle 23 angeordnete Deponiermittel 6, hier das Gelatine-Plättchen 6' wird somit im Grundkörper 17 freigelegt beziehungsweise exponiert. Der Grundkörper 17 befindet sich in Gebrauchsstellung 19.

Es kann somit gesagt werden, dass zum Exponieren des Deponiermittels 6 der das Deponiermittel 6 aufnehmende Grundkörper 17 der gekapselten Einheit 16 über eine Koppelbewegung, hier eine Drehbewegung, mit dem Port 15 des abgegrenzten und/oder dekontaminierbaren Bereichs 14 gekoppelt wird, wobei durch die selbe Koppelbewegung, hier Drehbewegung eine Verbindung zwischen dem Grundkörper 17 und dem Deckel 18 der gekapselten Einheit 16 gelöst wird und dass gleichzeitig eine durch dieselbe Koppelbewegung bewirkte Verbindung zwischen der Tür 50, hier der Handhabungsvorrichtung 25, des Ports 15 und dem Deckel 18 der gekapselten Einheit hergestellt wird. Es kann darüber hinaus gesagt werden, dass der Deckel 18 der gekapselten Einheit 16 nach dem Andocken über den Port 15 nach innen entnommen wird.

Beim Andocken der gekapselten Einheit 16 wird der Fluidauslass 31 des Grundkörpers 17 an die Fluidauslassleitung 36, hier Saugleitung 36', angeschlossen (Figur 15).

Anschließend wird der bewegbare Gehäuseabschnitt 27, wie in Figur 16 dargestellt, vollständig eingefahren, wobei die flexible Dichtung 29 die eingefahrene Position des Gehäuseabschnitts 27 definiert und begrenzt. Hierdurch ergibt sich, dass der Grundkörper 17 an den Zuführabschnitt 28 angeschlossen werden kann. Das Gelatine-Plättchen 6' und die fluiddurchlässige Anlagestelle 23 füllen dabei vollständig einen Öffnungsquerschnitt 47 des Zuführabschnitts 28 aus, sodass dieses den gesamten Fluidstromweg 41 ausfüllt. Es kann gesagt werden, dass nach dem Andocken der das Deponiermittel 6 aufnehmenden gekapselten Einheit 16 der Zuführabschnitt 28 für den Fluidstrom 5 an die gekapselte Einheit 16, hier den Grundkörper 17, angeschlossen wird.

Der Fluidstrom 5, hier der Luftstrom 5', wird aus der kontrollierten Umgebung 2 abgeführt und gelangt über den Zuführabschnitt 28 zum Gelatine-Plättchen 6', wodurch das Gelatine-Plättchen 6', das auf der fluiddurchlässigen Anlagestelle 23 angeordnet ist, von dem abgeführten Abschnitt 20 des Fluidstrom 5 passiert werden kann. Der das Gelatine-Plättchen 6' und die Anlagestelle 23 passierte Abschnitt 20 des Fluidstroms 5 wird zum Fluidauslass 31, der mit der Fluidauslassleitung 36 fluidisch dicht verbunden ist, geleitet und kann somit aus dem abgegrenzten Bereich 4 abgeführt werden. Ein Rückströmen des Fluidstroms 5 wird durch das Rücklaufsperrventil 24 des Fluidauslasses 31 verhindert.

Es kann somit gesagt werden, dass der Grundkörper 17 in Gebrauchsstellung 19 einen Abschnitt 20 des Fluidstroms 5 führt und dass der Abschnitt 20 des Fluidstroms 5 durch den Port 15 zum Deponiermittel 6 geführt ist. Es kann darüber hinaus gesagt werden, dass das Deponiermittel 6 während der Exponierung im Fluidstrom 5 außerhalb der kontrollierten Umgebung 2, im dargestellten Ausführungsbeispiel nämlich im abgegrenzten Bereich 4, angeordnet ist.

In einem nicht näher dargestellten Ausführungsbeispiel ist dem Deponiermittel 6 hierbei ein Partikelzähler 13 vorgeschaltet. Dabei kann vorgesehen sein, dass der Fluidstrom 5 durch den Partikelzähler 13 zur Erfassung einer Partikelanzahl und/oder Partikelgröße geführt wird und dass anschließend der Fluidstrom 5 zum Deponiermittel 6 geführt wird. Alternativ oder zusätzlich kann in einem weiteren, nicht näher dargestellten Ausführungsbeispiel ein Teilvolumen des Fluidstrom 5 abgezweigt und an den Partikelzähler 13 überführt werden.

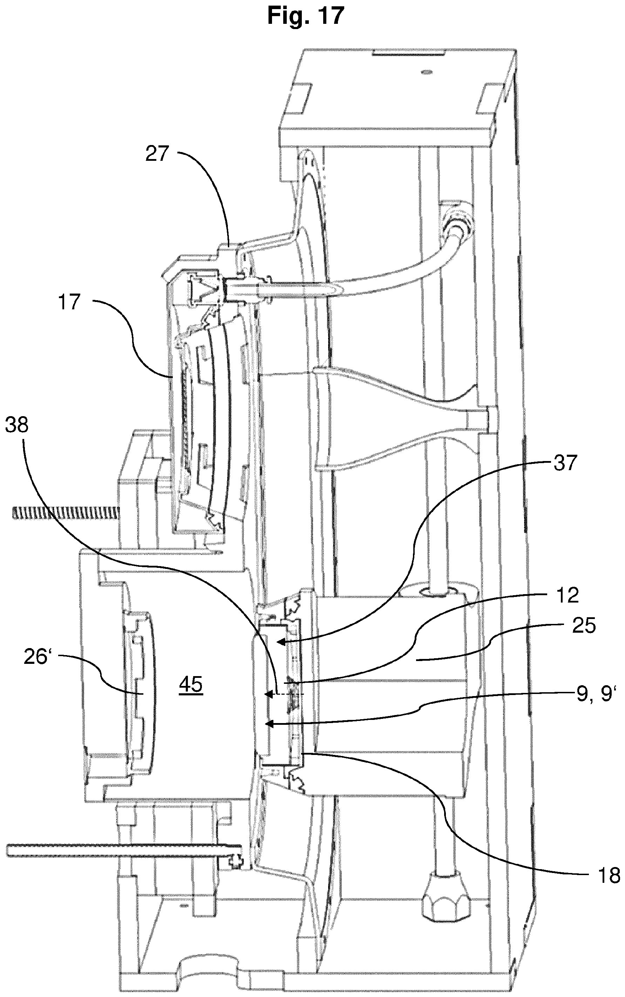

Nachdem der Fluidstrom 5 das Deponiermittel 6 passiert hat, wird der bewegbare Gehäuseabschnitt 27, gemäß Figur 17, wieder vollständig ausgefahren, wodurch der Nährmediumsverschluss 26' über die Handhabungsvorrichtung 25 im gesonderten Bereich 45 des abgegrenzten Bereichs 4 von dem Deckel 18 entfernt und dort abgelegt werden kann. Der Deckel 18 ist dabei weiterhin mit der Handhabungsvorrichtung 25 verbunden. Das von dem Nährmediumsträger 37 getragene Nährmedium 9 wird, nachdem der Nährmediumsverschluss 26' entfernt ist, aufgrund der Federrückstellkraft 38 des federnden Elements 12 in bereits beschriebener Art und Weise bewegt. Der Deckel 18 nimmt, nachdem der Nährmediumsverschluss 26' entfernt wurde, den in Figur 7 dargestellten und beschriebenen Zustand an.

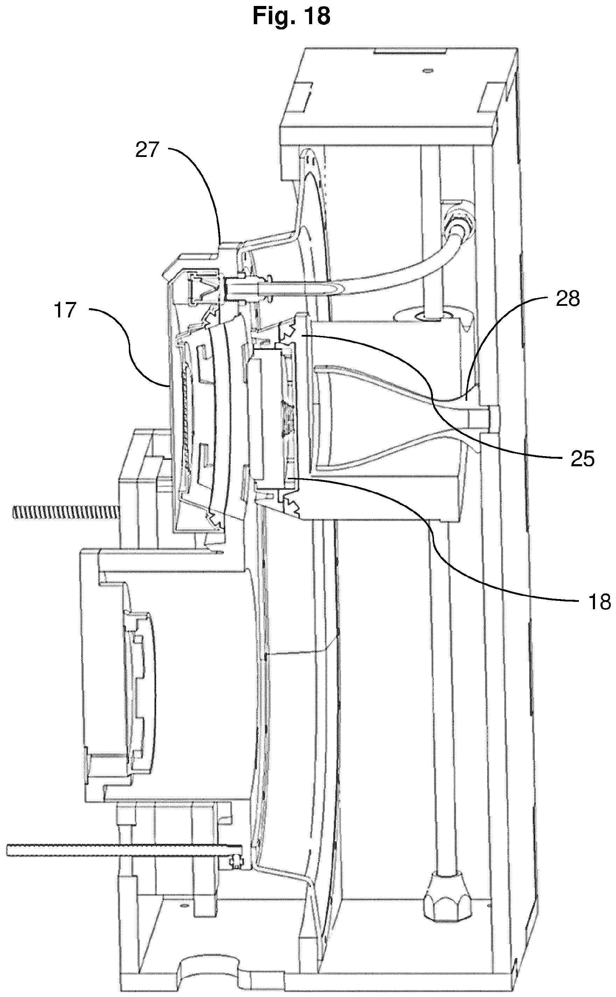

Anschließend wird der Deckel 18 über die bewegbare Handhabungsvorrichtung 25 erneut zwischen den Zuführabschnitt 28 und den Grundkörper 17 mit dem zuvor von dem Fluidstrom 5 durchströmten Deponiermittel 6 platziert. Dieser Verfahrensschritt ist in Figur 18 dargestellt.

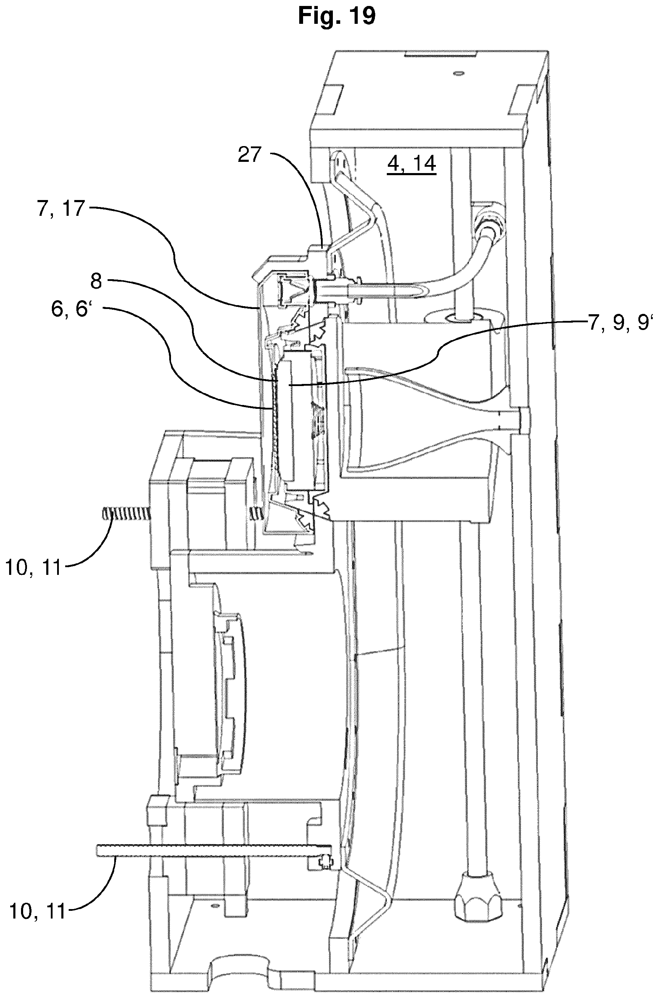

Anschließend wird der bewegbare Gehäuseabschnitt 27, gemäß Figur 19, zur mittleren Position bewegt, wodurch erreicht wird, dass das von dem Fluidstrom 5 passierte Gelatine-Plättchen 6' das federnd gelagerte Nährmedium 9 kontaktiert. Durch die Kontaktierung 8 wird das Gelatine-Plättchen 6' von dem Nährmedium 9, hier dem Agar 9'**,** aufgenommen.

Das federnd gelagerte Nährmedium 9 und der über den bewegbaren Gehäuseabschnitt 27 bewegbare Grundkörper 17 bilden Kontaktierungsmittel 7 zur Kontaktierung 8 des Deponiermittels 6 mit dem Nährmedium 9. Da der bewegbare Gehäuseabschnitt 27 von außerhalb des abgegrenzten Bereichs 4 betätigbar ist, kann gesagt werden, dass die Kontaktierungsmittel 7 von außerhalb des abgegrenzten Bereichs 4 antreibbar sind. Ferner wird der bewegbare Gehäuseabschnitt 27 von den Führungsmitteln 10, hier einer Linearführung 11, geführt, sodass eine geführte und/oder definierte Kontaktierung 8 des Deponiermittels 6 mit dem Nährmedium 9 ermöglicht ist. Dabei kann auch vorgesehen sein, dass über die Führungsmittel 10 auch Rotationsbewegungen durchgeführt werden können.

Allgemein kann gesagt werden, dass durch den bewegbaren Gehäuseabschnitt 27 das Nährmedium 9 mit dem Deponiermittel 6 in Kontakt bringbar ist. Ferner kann gesagt werden, dass das Deponiermittel 6 nach der Exponierung im Fluidstrom 5 im abgegrenzten und dekontaminierbaren Bereich 4, 14 mit dem Nährmedium 9 definiert und geführt in Kontakt gebracht wird.

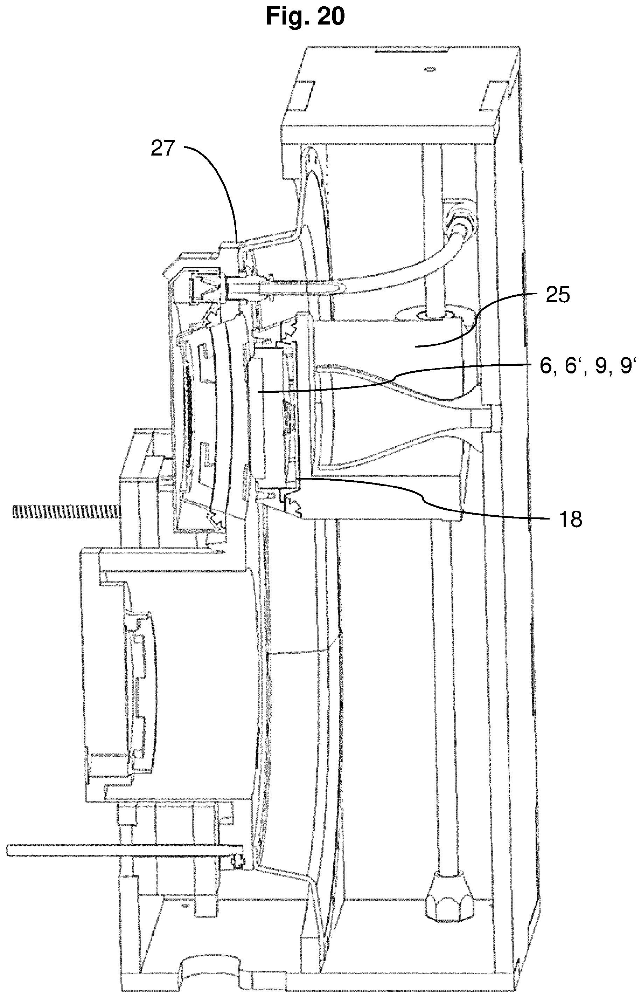

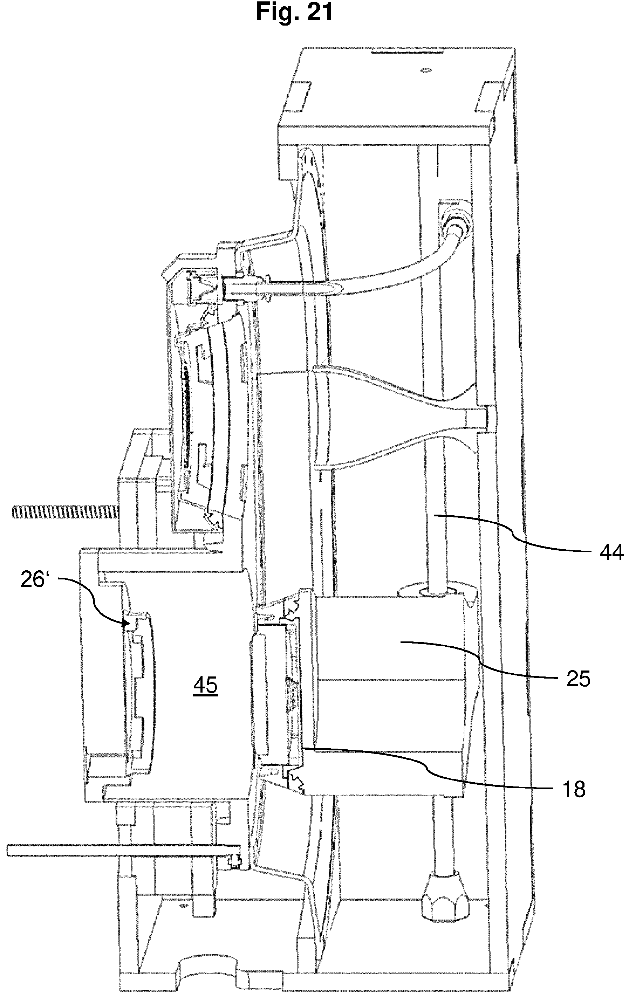

Nach der Kontaktierung 8 und einer Aufnahme des Gelatine-Plättchens 6' von dem Agar 9', wird der bewegbare Gehäuseabschnitt, gemäß Figur 20, erneut vollständig ausgefahren, wobei die Handhabungsvorrichtung 25 weiterhin mit dem Deckel 18 mit dem Nährmedium 9 und dem von diesem aufgenommenen Deponiermittel 6 gekoppelt ist. Der Deckel 18 wird sodann, wie in Figur 21 dargestellt, über die Schiene 44 von der Handhabungsvorrichtung 25 in Richtung des gesonderten Bereichs 45 bewegt, in welchem der Nährmediumsverschluss 26' positioniert ist.

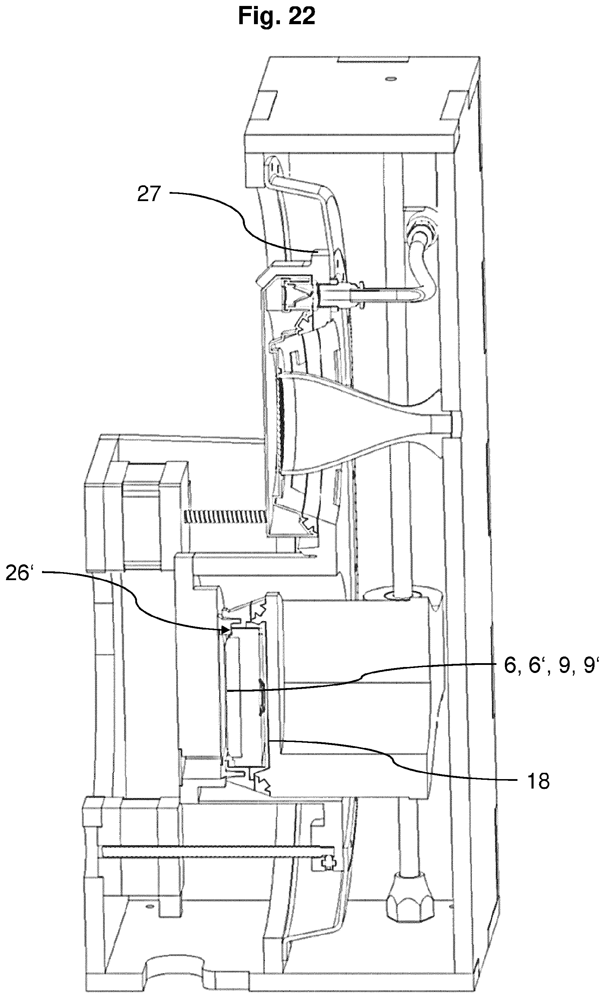

Anschließend wird, wie in Figur 22 dargestellt, der bewegbare Gehäuseabschnitt 27 vollständig eingefahren, wodurch das Nährmedium 9 und dem von diesem aufgenommenen Deponiermittel 6 von dem Nährmediumsverschluss 26' verschlossen wird.

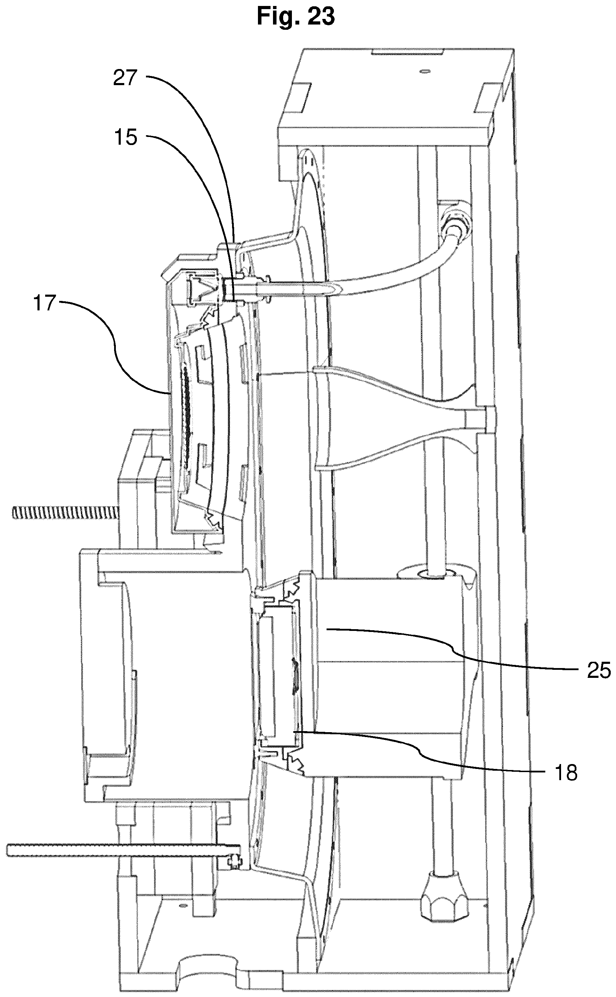

Gemäß den Figuren 23 bis 25 wird der bewegbare Gehäuseabschnitt 27 zunächst vollständig ausgefahren und der verschlossene Deckel 18 wieder über die Handhabungsvorrichtung 25 zum Port 15 mit dem Grundkörper 17 bewegt. Der bewegbare Gehäuseabschnitt 27 wird anschließend zur mittleren Position bewegt, wodurch der Deckel 18 von dem Grundkörper 17 in bereits beschriebener Art und Weise aufgenommen beziehungsweise mit diesem verbunden / an diesem angedockt werden kann.

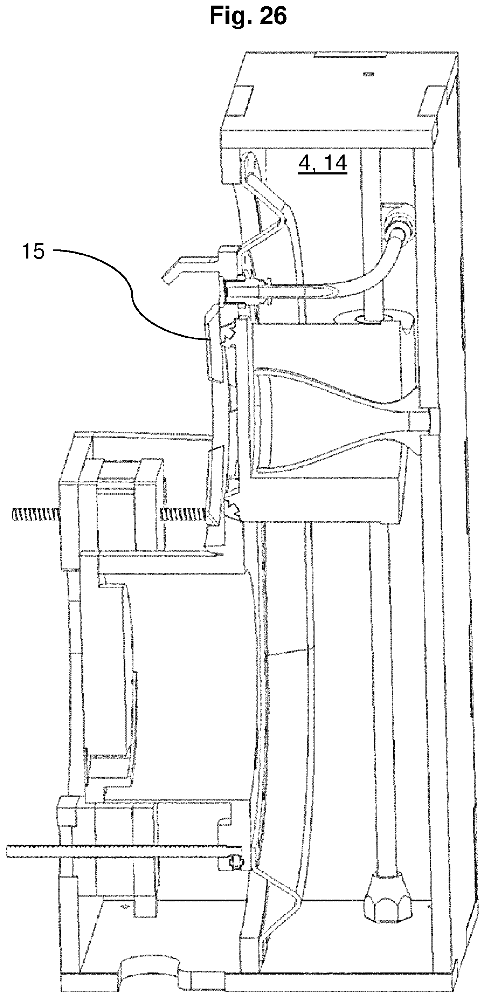

Schließlich kann die gesamte gekapselte Einheit 16 von dem Port 15 zur Auswertung auf mikrobiologische Verunreinigungen von dem abgegrenzten Bereich 4 entnommen (Figur 26) und beispielsweise einem Inkubator zur Auswertung zugeführt werden. Die Kopplung und Entkopplung der gekapselten Einheit 16 mit oder von dem Port 15 wird dabei über ein RTP (Rapid-Transfer-Port)-System bewirkt, wodurch zwischen dem Wechsel der gekapselten Einheit 16 keine Dekontamination stattfinden muss, da potenziell verunreinigte Oberflächen gegenseitig abgedeckt werden, so dass ein Kontaminationsrisiko minimiert ist.

Anschließend kann die abgegrenzte Umgebung 4 in bereits beschriebener Art und Weise mittels Dekontaminationsvorgang 40 dekontaminiert und eine weitere gekapselte Einheit 16 angedockt werden.

Weist der von der kontrollierten Umgebung 2, hier Isolator 3, abgeführte Fluidstrom 5 mikrobiologische Verunreinigungen auf, kann dies anhand einer Kultivierung von Mikroorganismen an dem das Deponiermittel 6 aufgenommenen Nährmedium 9 nachgewiesen werden.

Allgemein kann zum Überwachen auf mikrobiologische Verunreinigungen gesagt werden, dass eine Tür 50 eines Ports 15, hier die Handhabungsvorrichtung 25, zur Handhabung, hier zum Transport, eines Objekts 51, das in einer an den Port 15 ankoppelbaren gekapselten Einheit 16 angeordnet ist, verwendet wird.

Figur 27 zeigt eine als Isolator 3 ausgebildete kontrollierte Umgebung 2, wobei die Vorrichtung 1 zur Überwachung auf mikrobiologische Verunreinigungen an der kontrollierten Umgebung 2 angeordnet ist. Der Fluidstrom 15 wird hierbei über eine Fluideinlassleitung 56 von der Absaugstelle 57 zum Zuführabschnitt 28 geleitet. Die Fluideinlassleitung 56 ist hierbei nicht länger als ein Meter.

Figur 28 zeigt eine weitere als Isolator 3 ausgebildete kontrollierte Umgebung 2, wobei die Vorrichtung 1 zur Überwachung auf mikrobiologische Verunreinigungen im Unterschied zum vorangehenden Ausführungsbeispiel als von der kontrollierten Umgebung 2 separierte Einheit ausgebildet ist.

Es kann gesagt werden, dass der dekontaminierbare Bereich 14 der Vorrichtung 1 ein von der kontrollierten Umgebung abgegrenzter Bereich 4 ist.

Figur 29 zeigt eine weitere als Isolator 3 ausgebildete kontrollierte Umgebung 2, wobei die Vorrichtung 1 zur Überwachung auf mikrobiologische Verunreinigungen innerhalb der kontrollierten Umgebung 2 ohne Fluideinlassleitung 56 ausgebildet ist. Dabei kann gesagt werden, dass der dekontaminierbare Bereich 14 der Vorrichtung 1 ein Teil der kontrollierten Umgebung 2 ist.

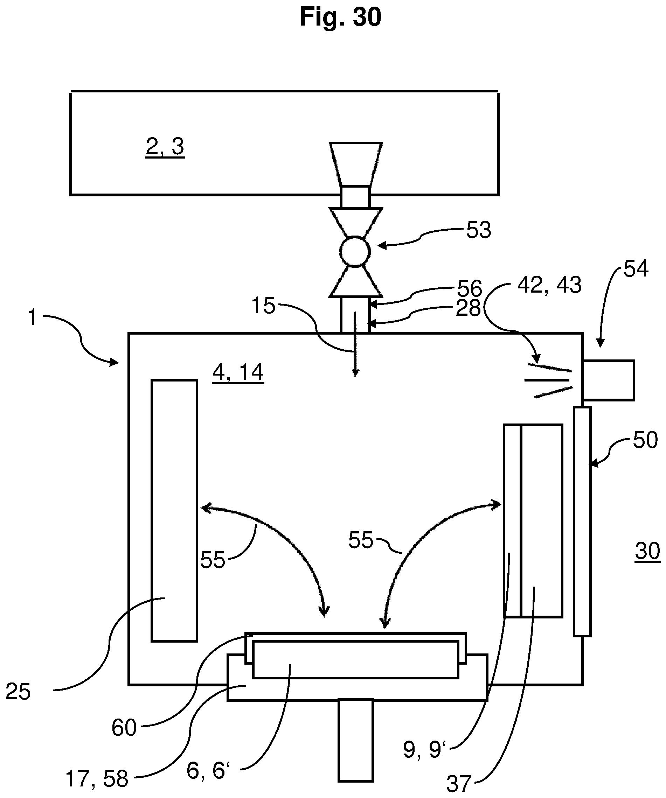

Figur 30 zeigt ein weiteres Verfahren und eine weitere Vorrichtung 1 zum Überwachen von mikrobiologischen Verunreinigungen in einer kontrollierten Umgebung 2, hier Isolator 3. Der Fluidstrom 15 wird über die Fluideinlassleitung 56 und dem Zuführabschnitt 28 aus der kontrollierten Umgebung 2 abgeführt. Die Fluideinlassleitung 56 ist hierbei mit einem Kugelventil 53 ausgebildet, um ein Rückströmen des Fluidstroms 15 von dem abgegrenzten und dekontaminierbaren Bereich 4, 14 in die kontrollierte Umgebung 2 zu verhindern. Im Gegensatz zu den bereits vorgestellten Ausführungsbeispielen sind das Nährmedium 9, hier das Agar 9', und das Deponiermittel 6, hier Gelatine-Blättchen 6', nicht innerhalb einer gemeinsamen gekapselten Einheit 16 angeordnet. Vielmehr wird das Deponiermittel 6 auf einem Deponierträger 58 positioniert und von einer Abdeckung 60 abgedeckt. Bevor der Fluidstrom 15 aus der kontrollierten Umgebung 2 abgeführt wird, wird der gesamte dekontaminierbare und abgegrenzte Bereich 4, 14 dekontaminiert. Hierzu wird über eine Düse 54 das Dekontaminationsmittel 42, hier Wasserstoffperoxid 43, in den abgegrenzten und dekontaminierbaren Bereich 4, 14 eingebracht. Anschließend kann die das Deponiermittel 6 abdeckende Abdeckung 60 von einer schwenkbaren Handhabungsvorrichtung 50 mittels Schwenkbewegung 55 von der Handhabungsvorrichtung 50 aufgenommen und entfernt werden, wodurch das Deponiermittel 6 exponiert wird. Nun kann der Fluidstrom 15 aus der kontrollierten Umgebung 2 abgeführt und dem Deponiermittel 6 zugeführt werden. Sobald der Fluidstrom 15 gestoppt wird, kann der schwenkbar gelagerte Nährmediumsträger 37, der das Nährmedium 9, hier das Agar 9', aufnimmt, in Richtung des von dem Fluidstrom 15 passierten Deponiermittels 6 geschwenkt werden, wodurch eine Kontaktierung 8 (hier nicht dargestellt) zwischen Deponiermittel 6 und Nährmedium 9 erfolgen kann. Anschließend können beide Einheiten, also das Deponiermittel 6 und das dieses aufnehmende Nährmedium 9 über eine erneute Schwenkbewegung 55 des Nährmediumträgers 37 vor einer den abgegrenzten und dekontaminierbaren Bereich 4, 14 von einer Außenwelt 30 abgrenzenden Türe 50 positioniert und durch Öffnen der Türe 50 aus dem abgegrenzten und dekontaminierbaren Bereich 4, 14 entnommen werden. Im gezeigten Ausführungsbeispiel ist der Deponierträger 58 am Grundkörper 17 ausgebildet, wobei die Tür 50 nicht die Handhabungsvorrichtung 25 gemäß den vorangehenden Ausführungsbeispielen ausbildet.

Somit benutzt die Erfindung die Erkenntnis, den Deckel 18 der gekapselten Einheit 16 zur Handhabung, insbesondere zum Transport, des Objekts 51, also hier des Nährmediums 9 und des Deponiermittels 6, das in der an den Port 15 der kontrollierten Umgebung 2 oder auch des abgegrenzten Bereichs 4 bzw. des dekontaminierbaren Bereichs 14 ankoppelbaren gekapselten Einheit 16 angeordnet ist.

Außerdem schlägt die Erfindung eine Verwendung des Grundkörpers 17 der gekapselten Einheit 16 zur Handhabung, insbesondere zur Bereitstellung (hier bspw. für eine Filtration oder einer Deponierung), des Objekts 51, insbesondere des Nährmediums 9 und/oder des Deponiermittels 6, das in der vorzugsweise an einen Port 15 der kontrollierten Umgebung 2 oder auch des abgegrenzten Bereichs 4 bzw. des dekontaminierbaren Bereichs 14 ankoppelbaren gekapselten Einheit 16 angeordnet ist.

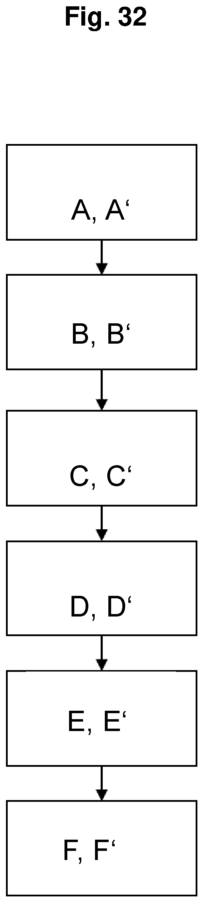

Fig. 32 stellt eine mögliche, jedoch nicht einschränkende Reihenfolge von Verfahrensschritten A bis F zum Durchführen des erfindungsgemäßen Verfahrens zum Überwachen von mikrobiologischen Verunreinigungen in einer kontrollierten Umgebung 2 mit der erfindungsgemäßen Vorrichtung 1 in einem Blockdiagramm dar. Funktionell und/oder konstruktiv zu den vorgehenden Ausführungsbeispielen gleichartige oder identische Bauteile und Funktionseinheiten sind mit denselben Bezugszeichen bezeichnet und nicht noch einmal gesondert beschrieben.

In einem ersten Verfahrensschritt A erfolgt zunächst eine Vorbereitung zur Dekontamination A', im dargestellten Ausführungsbeispiel wird hierbei zunächst der abgegrenzte Bereich 4 für den Dekontaminationsvorgang 40 vorbereitet. Als nächstes erfolgt im Verfahrensschritt B eine Dekontamination B' des abgegrenzten Bereichs 4. Sobald die Dekontamination B' des abgegrenzten Bereichs 4 erfolgt ist, kann im Verfahrensschritt C ein Andocken C' der gekapselten Einheit 16 an den Port 15 des abgegrenzten Bereichs 4 in bereits beschriebener Art und Weise erfolgen. Nach dem Andocken C' erfolgt im nächsten Verfahrensschritt D eine Exponierung D' des Deponiermittels 6, hier des bereits beschriebene Gelatine-Blättchens 6', im Fluidstrom 5, beziehungsweise dem Luftstrom 5'. Im nächsten Verfahrensschritt E erfolgt eine Kontaktierung und Übertragung E' des Deponiermittels 6 mit dem / auf das Nährmedium 9, beispielsweise dem Agar 9'. Schließlich erfolgt im Verfahrensschritt F eine Entnahme F' der gesamten gekapselten Einheit 16 in bereits beschriebener Art und Weise.

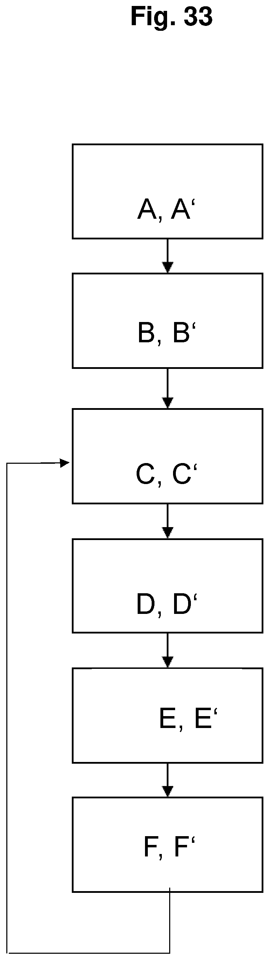

Fig. 33 zeigt eine weitere Möglichkeit zur Durchführung des Verfahrens gemäß Fig. 32, wobei im Unterschied zu Fig. 32 nach der Entnahme **F'** der gekapselten Einheit 16 eine weitere gekapselte Einheit 16 gemäß Verfahrensschritt C angedockt wird und die bereits beschriebenen Verfahrensschritte D bis F durchgeführt werden.

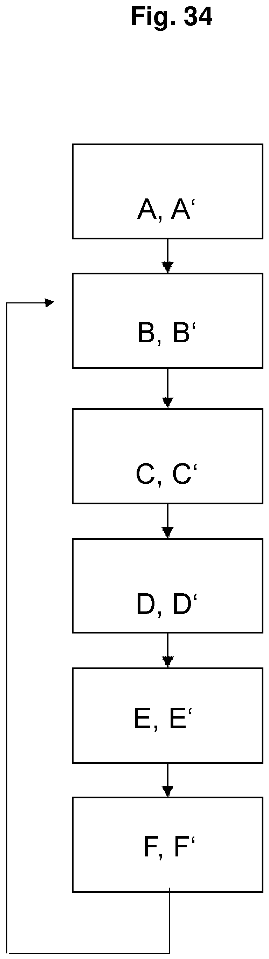

Fig. 34 zeigt eine weitere Möglichkeit zur Durchführung des Verfahrens gemäß Fig. 32, wobei im Unterschied zu Fig. 32 nach der Entnahme F' der gekapselten Einheit 16 vor dem Andocken C' einer weiteren gekapselten Einheit 16 eine erneute Dekontamination B' des abgegrenzten Bereichs 4 erfolgt. Anschließend können die bereits beschriebenen Verfahrensschritte C bis F durchgeführt werden.

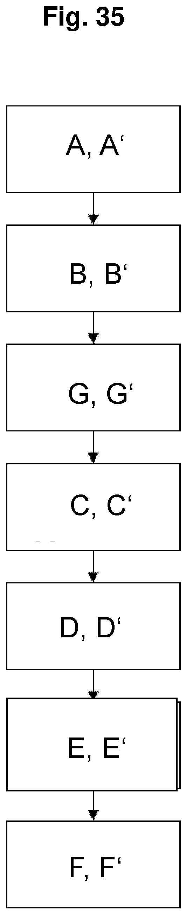

Fig. 35 stellt eine weitere Möglichkeit zur Durchführung des Verfahrens gemäß Fig. 32 dar, wobei im Unterschied zu Fig. 32 zwischen den Verfahrensschritten B und C ein weiterer Verfahrensschritt G erfolgt. Hierbei wird nach der Dekontamination B' der abgegrenzte Bereich 4 für eine Aufnahme der gekapselten Einheit 16 vorbereitet (Schritt G'). Anschließend werden die Verfahrensschritte C bis F durchgeführt.

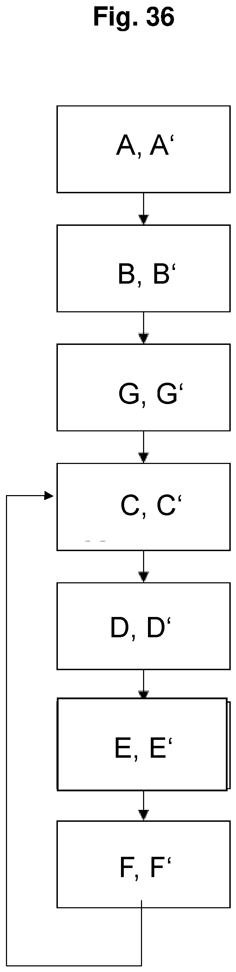

Fig. 36 stellt eine weitere Möglichkeit zur Durchführung des Verfahrens gemäß Fig. 35 dar, wobei im Unterschied zu Fig. 35 nach der Entnahme **F'** eine weitere gekapselte Einheit 16 an den Port 15 des abgegrenzten Bereichs gemäß Verfahrensschritt C angedockt wird. Anschließend können die Verfahrensschritte D bis F durchgeführt werden.

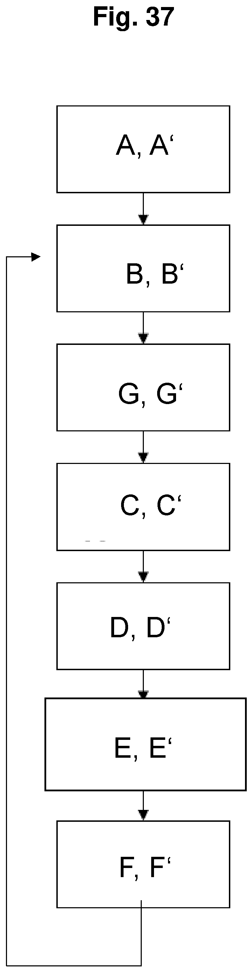

Fig. 37 stellt eine weitere Möglichkeit zur Durchführung des Verfahrens gemäß Fig. 35 dar, wobei im Unterschied zu Fig. 35 nach der Entnahme F' eine weitere Dekontamination B' erfolgt, bevor anschließend die weiteren Verfahrensschritte G bis F mit durchgeführt werden.

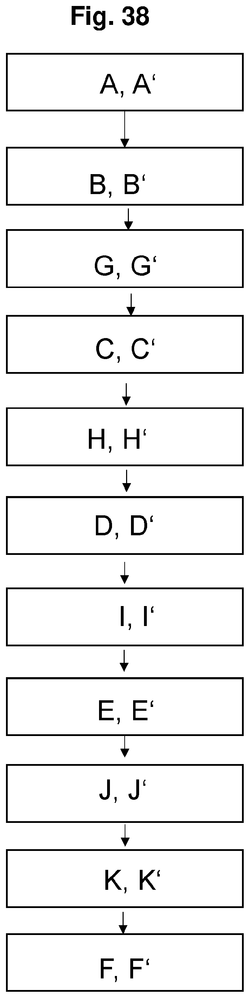

Die Fig. 38 bis 40 stellen mögliche Varianten des Verfahrens gemäß den Figuren 32 bis 37 nochmals etwas detaillierter dar. Das Verfahren zur Überwachung von mikrobiologischen Verunreinigungen gemäß Fig. 38 wird wie folgt durchgeführt (Vgl. Fig. 9 bis 26):
Zunächst erfolgt der Verfahrensschritt A, in welchem, wie bereits beschrieben, die Vorbereitung zur Dekontamination A' des abgegrenzten Bereichs 4 für die Dekontamination B' des Verfahrensschritts B durchgeführt wird. Nach der Dekontamination B' erfolgt die Vorbereitung zur Aufnahme G' der gekapselten Einheit 16 des abgegrenzten Bereichs 4. Anschließend erfolgt das Andocken C' der gekapselten Einheit 16 an den Port 15 des abgegrenzten Bereichs 4. Anschließend erfolgt im Verfahrensschritt H ein Lösen und Wegtransport des Deckels 18 vom Grundkörper 17 der gekapselten Einheit 16, wodurch das Deponiermittel 6, beispielsweise das Gelatine-Plättchen 6', freigelegt und die Exponierung D' im Fluidstrom 5, hier Luftstrom 5', der aus der kontrollierten Umgebung 2 abgeführt wird, erfolgen kann. Anschließend erfolgt im Verfahrensschritt I ein Lösen und Abnehmen des Verschlusses I', hier des Nährmediumsverschlusses 26' vom Deckel 18, wodurch das Nährmedium 9, hier das Agar 9' in bereits beschriebener Art und Weise freigelegt wird, so dass im Verfahrensschritt E die Kontaktierung und Übertragung E' des Deponiermittels 6 mit dem / auf das Nährmedium 9 erfolgen kann. Anschließend erfolgt im Verfahrensschritt J ein Aufsetzen des Verschlusses J' auf den Deckel 18. Im Verfahrensschritt K findet ein Aufsetzen des Deckels K' auf den Grundkörper 17 der gekapselten Einheit 16 statt, so dass die gekapselte Einheit 16 im Verfahrensschritt F in bereits beschriebener Art und Weise entnommen werden kann.

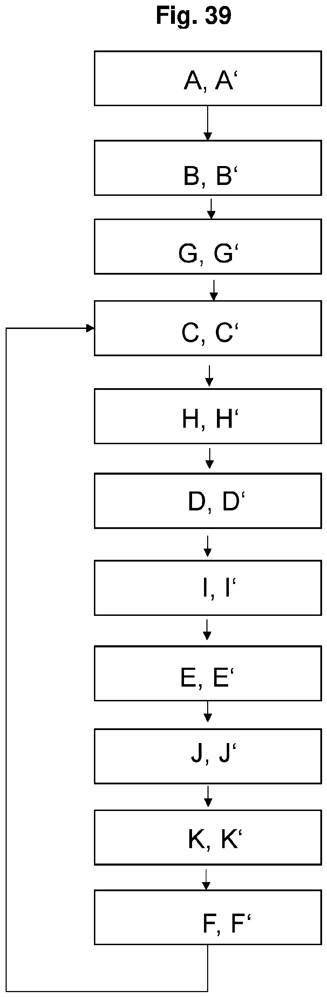

Im Unterschied zum vorangegangenen Ausführungsbeispiel gemäß Fig. 38, unterscheidet sich das Verfahren gemäß Fig. 39 dadurch, dass nach der Entnahme F' der gekapselten Einheit 16 der Verfahrensschritt C, das Andocken C' einer weiteren gekapselten Einheit 16 und sodann die Durchführung der dem Verfahrensschritt C vorangehend vorgestellten Verfahrensschritten erfolgt.

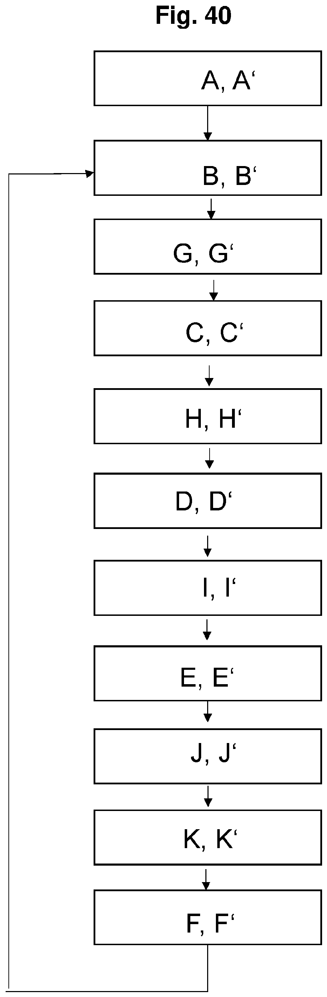

Im Unterschied zum vorangegangenen Ausführungsbeispiel gemäß Fig. 38, unterscheidet sich das Verfahren gemäß Fig. 40 dadurch, dass nach der Entnahme F' der gekapselten Einheit 16 der Verfahrensschritt B der Dekontamination B' durchgeführt wird. Anschließend können die weiteren vorangehenden Verfahrensschritte gemäß Fig. 38 mit einer weiteren gekapselten Einheit 16 durchgeführt werden.

### Bezugszeichenliste

- 1: Vorrichtung
- 2: kontrollierte Umgebung
- 3: Isolator
- 4: abgegrenzter Bereich
- 5: Fluidstrom
- 5': Luftstrom
- 6: Deponiermittel
- 6': Gelatine-Plättchen
- 7: Kontaktierungsmittel
- 8: Kontaktierung
- 9: Nährmedium
- 9': Agar
- 10: Führungsmittel
- 11: Linearführung
- 12: federndes Element
- 13: Partikelzähler
- 14: dekontaminierbarer Bereich
- 15: Port
- 16: gekapselte Einheit
- 17: Grundkörper
- 18: Deckel
- 19: Gebrauchsstellung
- 20: Abschnitt
- 21: Koppelelement
- 22: Gegenkoppelelement
- 23: Anlagestelle
- 24: Rücklaufsperrventil
- 25: Handhabungsvorrichtung
- 26: Verschluss
- 26': Nährmediumsverschluss
- 27: Gehäuseabschnitt
- 28: Zuführabschnitt
- 29: flexible Dichtung
- 30: Außenwelt
- 31: Fluidauslass
- 32: Vorsprung
- 33: Aussparung
- 34: Außenumfang Deckel
- 34': Außenumfangsabschnitt
- 35: Außenumfang Grundkörper
- 36: Fluidauslassleitung
- 36': Saugleitung
- 37: Nährmediumsträger
- 38: Federrückstellkraft
- 39: Dekontaminationsgrundkörper
- 40: Dekontaminationsvorgang
- 41: Fluidstromweg
- 42: Dekontaminationsmittel
- 43: Wasserstoffperoxid
- 44: Schiene
- 45: gesonderter Bereich
- 46: äußere Begrenzung
- 47: Öffnungsquerschnitt
- 48: Präsentationsmittel
- 49: Kontaktierungsrichtung
- 50: Tür
- 51: Objekt
- 52: Drehknopf
- 53: Kugelventil
- 54: Düse
- 55: Schwenkbewegung
- 56: Fluideinlassleitung
- 57: Absaugstelle
- 58: Deponierträger
- 59: Haken
- 60: Abdeckung
- A: Verfahrensschritt
- A': Vorbereitung zur Dekontamination
- B: Verfahrensschritt
- B': Dekontamination
- C: Verfahrensschritt
- C': Andocken
- D: Verfahrensschritt
- D': Exponierung
- E: Verfahrensschritt
- E': Kontaktierung und Übertragung
- F: Verfahrensschritt
- F': Entnahme
- G: Verfahrensschritt
- G': Vorbereitung zur Aufnahme
- H: Verfahrensschritt
- H': Lösen und Wegtransport eines Deckels
- I: Verfahrensschritt
- I': Lösen und Abnehmen eines Verschlusses
- J: Verfahrensschritt
- J': Aufsetzen eines Verschlusses
- K: Verfahrensschritt
- K': Aufsetzen eines Deckels

## Patentansprüche

1. Vorrichtung (1) zur Überwachung von mikrobiologischen Verunreinigungen in einer kontrollierten Umgebung (2), vorzugsweise einem Isolator (3), mit wenigstens einem von der kontrollierten Umgebung (2) abgegrenzten Bereich (4), wobei ein Fluidstrom (5) aus der kontrollierten Umgebung (2) führbar ist, wobei der Fluidstrom (5) ein in dem abgegrenzten Bereich (4) angeordnetes Deponiermittel (6) passiert, **dadurch gekennzeichnet, dass** im abgegrenzten Bereich (4) Kontaktierungsmittel (7) zur Kontaktierung (8) des Deponiermittels (6) mit einem Nährmedium (9) ausgebildet sind.

2. Vorrichtung (1) nach Anspruch 1, **dadurch gekennzeichnet, dass** die Kontaktierungsmittel (7) von außerhalb des abgegrenzten Bereichs (4) betätigbar, insbesondere antreibbar, sind.

3. Vorrichtung (1) zur Überwachung von mikrobiologischen Verunreinigungen, insbesondere nach dem Oberbegriff von Anspruch 1 oder nach einem der vorangehenden Ansprüche, in einer kontrollierten Umgebung (2), vorzugsweise einem Isolator (3), wobei der oder ein Fluidstrom (5) aus der kontrollierten Umgebung (2) über das oder ein Deponiermittel (6) führbar ist, **dadurch gekennzeichnet, dass** Führungsmittel (10) zu einer definierten und/oder geführten Kontaktierung (8) des Deponiermittels (6) mit dem oder einem Nährmedium (9) ausgebildet sind.

4. Vorrichtung (1) nach einem der vorangehenden Ansprüche, **dadurch gekennzeichnet, dass** die Führungsmittel (10) eine Linearführung (11) bilden.

5. Vorrichtung (1) nach einem der vorangehenden Ansprüche, **dadurch gekennzeichnet, dass** das Nährmedium (9) und/oder das Deponiermittel (6) zur Kontaktierung (8) beweglich, insbesondere federnd, gelagert ist/sind.

6. Vorrichtung (1) nach einem der vorangehenden Ansprüche, **dadurch gekennzeichnet, dass** dem Deponiermittel (6) ein Partikelzähler (13) vorgeschaltet ist.

7. Vorrichtung (1) zur Überwachung von mikrobiologischen Verunreinigungen, insbesondere nach dem Oberbegriff von Anspruch 1 oder 3 oder nach einem der vorangehenden Ansprüche, in der oder einer kontrollierten Umgebung (2), vorzugsweise dem oder einem Isolator (3), wobei der oder ein Fluidstrom (5) aus der kontrollierten Umgebung (2) führbar ist, wobei der Fluidstrom (5) in einem abgegrenzten und/oder dekontaminierbaren Bereich (4, 14) ein Deponiermittel (6) passiert, **dadurch gekennzeichnet, dass** der abgegrenzte und/oder dekontaminierbare Bereich (4, 14) einen Port (15) hat, an den ein Grundkörper (17) einer gekapselten Einheit (16) andockbar ist, und dass die gekapselte Einheit (16) einen über den Port (15) abnehmbaren Deckel (18) hat und ein Nährmedium (9) aufnimmt und der Grundkörper (17) in Gebrauchsstellung (19) einen Abschnitt (20) des Fluidstroms (5) führt und dass der Abschnitt (20) des Fluidstroms (5) durch den Port (15) zum Deponiermittel (6) geführt ist.

8. Vorrichtung (1) nach einem der vorangehenden Ansprüche, **dadurch gekennzeichnet, dass** der Deckel (18) und/oder der Grundkörper (17) ein Koppelelement (21) aufweist, das mit einem Gegenkoppelelement (22) des Ports (15) koppelbar ist.

9. Vorrichtung (1) nach einem der vorangehenden Ansprüche, **dadurch gekennzeichnet, dass** die gekapselte Einheit (16) eine fluiddurchlässige Anlagestelle (23) und/oder ein Präsentationsmittel (48) für das Deponiermittel (6) ausbildet.

10. Vorrichtung (1) nach einem der vorangehenden Ansprüche, **dadurch gekennzeichnet, dass** der Grundkörper (17) das Deponiermittel (6) unverlierbar aufnimmt.

11. Vorrichtung (1) nach einem der vorangehenden Ansprüche, **dadurch gekennzeichnet, dass** der Deckel (18) das Nährmedium (9) unverlierbar aufnimmt.

12. Vorrichtung (1) nach einem der vorangehenden Ansprüche, **dadurch gekennzeichnet, dass** die gekapselte Einheit (16) im Abschnitt (20) des Fluidstroms (5) ein Rücklaufsperrventil (24) hat.

13. Vorrichtung (1) nach einem der vorangehenden Ansprüche, **dadurch gekennzeichnet, dass** der dekontaminierbare Bereich (14) die kontrollierte Umgebung (2), ein Teil der kontrollierten Umgebung (2) oder ein oder der von der kontrollierten Umgebung (2) abgegrenzter Bereich (4) ist.

14. Vorrichtung (1) nach einem der vorangehenden Ansprüche, **dadurch gekennzeichnet, dass** der abgegrenzte Bereich (4) oder der dekontaminierbare Bereich (14) einen bewegbaren Gehäuseabschnitt (27) aufweisen, insbesondere wobei durch den bewegbaren Gehäuseabschnitt (27) der Abschnitt (20) des Fluidstroms (5) an einen vorgelagerten Zuführabschnitt (28) anschließbar ist und/oder das oder ein Nährmedium (9) mit dem oder einem Deponiermittel (6) in Kontakt bringbar ist.

15. Vorrichtung (1) nach einem der vorangehenden Ansprüche, **dadurch gekennzeichnet, dass** der bewegbare Gehäuseabschnitt (27) des abgegrenzten oder dekontaminierbaren Bereichs (4, 14) mit einer flexiblen Dichtung (29) verbunden ist.

16. Vorrichtung (1), insbesondere nach dem Oberbegriff eines der vorangehenden Ansprüche oder nach einem der vorangehenden Ansprüche, zur Überwachung von mikrobiologischen Verunreinigungen in einer kontrollierten Umgebung (2), vorzugsweise einem Isolator (3), mit wenigstens einem von der kontrollierten Umgebung (2) abgegrenzten Bereich (4), wobei ein Fluidstrom (5) aus der kontrollierten Umgebung (2) führbar ist, wobei der Fluidstrom (5) ein in dem abgegrenzten Bereich (4) angeordnetes und insbesondere über ein Präsentationsmittel (48) exponiertes Deponiermittel (6) passiert, **dadurch gekennzeichnet, dass** der abgegrenzte Bereich (4) dekontaminierbar ist.

17. Verfahren zum Überwachen von mikrobiologischen Verunreinigungen in einer kontrollierten Umgebung (2), vorzugsweise Isolator (3), wobei ein Fluidstrom (5), insbesondere ein Luftstrom (5'), aus der kontrollierten Umgebung (2) abgeführt wird, wobei der aus der kontrollierten Umgebung (2) abgeführte Fluidstrom (5) in einem von der kontrollierten Umgebung (2) abgegrenzten und/oder dekontaminierbaren Bereich (4, 14) ein Deponiermittel (6) passiert, **dadurch gekennzeichnet, dass** das Deponiermittel (6) nach einer Exponierung im Fluidstrom (5) im abgegrenzten und/oder dekontaminierbaren Bereich(4, 14) mit einem Nährmedium (9) in Kontakt gebracht wird.

18. Verfahren nach dem vorangehenden Anspruch, **dadurch gekennzeichnet, dass** das Deponiermittel (6) während der Exponierung im Fluidstrom (5) außerhalb der kontrollierten Umgebung (2) angeordnet ist.

19. Verfahren nach einem der vorangehenden Ansprüche, **dadurch gekennzeichnet, dass** das Nährmedium (9) und/oder das Deponiermittel (6) zur Kontaktierung (8) zumindest teilweise entlang einer Kontaktierungsrichtung (49) bewegt werden.

20. Verfahren nach dem Oberbegriff von Anspruch 17 oder nach einem der vorangehenden Ansprüche, **dadurch gekennzeichnet, dass** das Deponiermittel (6) nach der oder einer Exponierung im Fluidstrom (5) im abgegrenzten und/oder dekontaminierbaren Bereich (4, 14) mit dem oder einem Nährmedium (9) definiert, insbesondere geführt, in Kontakt gebracht wird.

21. Verfahren, insbesondere nach einem der vorangehenden Ansprüche, zum Überwachen von mikrobiologischen Verunreinigungen in der oder einer kontrollierten Umgebung (2), vorzugsweise Isolator (3), wobei der oder ein Fluidstrom (5), insbesondere ein Luftstrom (5'), aus der kontrollierten Umgebung (2) abgeführt wird , wobei der aus der kontrollierten Umgebung (2) abgeführte Fluidstrom (5) ein Deponiermittel (6) passiert, das in einem abgegrenzten und/oder dekontaminierbaren Bereich (4, 14) angeordnet ist, **dadurch gekennzeichnet, dass** das Deponiermittel (6) vor einer Exponierung im Fluidstrom (5) in der oder einer gekapselten Einheit (16) an den dekontaminierbaren und/oder abgegrenzten Bereich (4, 14) angedockt wird und dass die gekapselte Einheit (16) bei der Exponierung einen Abschnitt (20) des Fluidstroms (5) führt.

22. Verfahren nach einem der vorangehenden Ansprüche, **dadurch gekennzeichnet, dass** nach dem oder einem Andocken der das Deponiermittel (6) aufnehmenden gekapselten Einheit (16) ein Zuführabschnitt (28) für den Fluidstrom (5) an die gekapselte Einheit (16) angeschlossen wird.

23. Verfahren nach einem der vorangehenden Ansprüche, **dadurch gekennzeichnet, dass** der Fluidstrom (5) durch einen Partikelzähler (13) zur Erfassung einer Partikelanzahl und/oder Partikelgröße geführt wird, insbesondere wobei anschließend derselbe Fluidstrom (5) zum Deponiermittel (6) geführt wird und/oder wobei ein Teilvolumen des Fluidstroms (5) abgezweigt wird, insbesondere wobei der abgezweigte Fluidstrom (5) an den Partikelzähler (13) überführt wird und/oder wobei die oder eine Abzweigung außerhalb der kontrollierten Umgebung (2) stattfindet.

24. Verfahren, insbesondere nach einem der vorangehenden Ansprüche, zum Überwachen von mikrobiologischen Verunreinigungen in der oder einer kontrollierten Umgebung (2), vorzugsweise Isolator (3), wobei der oder ein Fluidstrom (5), insbesondere ein Luftstrom (5'), aus der kontrollierten Umgebung (2) abgeführt wird , wobei der aus der kontrollierten Umgebung (2) abgeführte Fluidstrom (5) ein insbesondere über ein Präsentationsmittel exponiertes Deponiermittel (6) passiert, das in einem abgegrenzten Bereich (4) angeordnet ist, **dadurch gekennzeichnet, dass** der abgegrenzte Bereich (4) vor einem Exponieren des Deponiermittels (6) dekontaminiert wird.

25. Verfahren, insbesondere nach einem der vorangehenden Ansprüche, zum Überwachen von mikrobiologischen Verunreinigungen in der oder einer kontrollierten Umgebung (2), vorzugsweise Isolator (3), wobei der oder ein Fluidstrom (5), insbesondere ein Luftstrom (5'), aus der kontrollierten Umgebung (2) abgeführt wird , wobei der aus der kontrollierten Umgebung (2) abgeführte Fluidstrom (5) ein Deponiermittel (6) passiert, das in einem abgegrenzten und/oder dekontaminierbaren Bereich (4, 14) angeordnet ist, **dadurch gekennzeichnet, dass** zum Exponieren des Deponiermittels (6) der oder ein das Deponiermittel (6) aufnehmender Grundkörper (17) der oder einer gekapselten Einheit (16) über eine Koppelbewegung, insbesondere eine Drehbewegung, mit dem oder einem Port (15) des abgegrenzten und/oder dekontaminierbaren Bereichs (4, 14) gekoppelt wird.

26. Verfahren nach dem vorangehenden Anspruch, **dadurch gekennzeichnet, dass** durch dieselbe Koppelbewegung, insbesondere Drehbewegung, eine Verbindung zwischen dem Grundkörper (17) und dem oder einem Deckel (18) der gekapselten Einheit (16) gelöst wird.

27. Verfahren, insbesondere nach einem der vorangehenden Ansprüche, zum Überwachen von mikrobiologischen Verunreinigungen in der oder einer kontrollierten Umgebung (2), vorzugsweise Isolator (3), wobei der oder ein Fluidstrom (5), insbesondere ein Luftstrom (5'), aus der kontrollierten Umgebung (2) abgeführt wird , wobei der aus der kontrollierten Umgebung (2) abgeführte Fluidstrom (5) ein Deponiermittel (6) passiert, das in einem abgegrenzten und/oder dekontaminierbaren Bereich (4, 14) angeordnet ist, **dadurch gekennzeichnet, dass** zum Exponieren des Deponiermittels (6) der oder ein Grundkörper (17) der oder einer gekapselten Einheit (16) über eine Koppelbewegung, insbesondere eine Drehbewegung, mit dem oder einem Port (15) des abgegrenzten und/oder dekontaminierbaren Bereichs (4, 14) gekoppelt wird, wobei durch dieselbe Koppelbewegung, insbesondere Drehbewegung, eine kraft- und/oder formschlüssige Verbindung zwischen einer Tür (50) des Ports (15) und dem oder einem Deckel (18) der gekapselten Einheit (16) hergestellt wird.

28. Verfahren nach einem der vorangehenden, auf ein Verfahren gerichteten Ansprüche unter Verwendung einer Vorrichtung (1) nach einem der Ansprüche 1 bis 16.

29. Verwendung einer gekapselten Einheit (16) zum Transport eines Deponiermittels (6) und/oder eines Nährmediums (9) zu einer Gebrauchsstellung (19), in der das Deponiermittel (6) in einem Fluidstrom (15) exponiert wird, **dadurch gekennzeichnet, dass** ein Verfahren nach einem der vorangehenden, auf ein Verfahren gerichteten Ansprüche ausgeführt wird und/oder dass der oder ein Grundkörper (17) (16) von außen an den oder einen abgegrenzten und/oder dekontaminierbaren Bereich (4, 14) angedockt wird.

30. Verwendung nach dem vorangehenden Anspruch, **dadurch gekennzeichnet, dass** der oder ein Deckel (18) der gekapselten Einheit (16) nach dem Andocken über den oder einen Port (15), vorzugsweise nach innen, entnommen wird.

31. Verwendung nach einem der vorangehenden Ansprüche, **dadurch gekennzeichnet, dass** beim Andocken ein Fluidauslass (31) des Grundkörpers (17) an eine Fluidauslassleitung (36), insbesondere eine Saugleitung (36'), angeschlossen wird, insbesondere zwischenstücklos und/oder direkt.

32. Verwendung einer Tür (50) eines Ports (15) zur Handhabung, insbesondere zum Transport, eines Objekts (51), insbesondere eines Nährmediums (9) und/oder eines Deponiermittels (6), das in einer an den Port (15) ankoppelbaren gekapselten Einheit (16) angeordnet ist.

33. Verwendung nach dem vorangehenden Anspruch, **dadurch gekennzeichnet, dass** die Tür (50) eine Handhabungsvorrichtung (25) ist.

34. Verwendung eines Deckels (18) einer gekapselten Einheit (16) zur Handhabung, insbesondere zum Transport, eines Objekts (51), insbesondere eines Nährmediums (9) und/oder eines Deponiermittels (6), das in der vorzugsweise an einen Port (15) einer kontrollierten Umgebung (2) ankoppelbaren gekapselten Einheit (16) angeordnet ist.

35. Verwendung eines Grundkörpers (17) einer gekapselten Einheit (16) zur Handhabung, insbesondere zur Bereitstellung, eines Objekts (51), insbesondere eines Nährmediums (9) und/oder eines Deponiermittels (6), das in der vorzugsweise an einen Port (15) einer kontrollierten Umgebung (2) ankoppelbaren gekapselten Einheit (16) angeordnet ist.
